(19) **Europäisches Patentamt**
**European Patent Office**
**Office européen des brevets**

(11) **EP 2 665 276 A1**

(12) **EUROPEAN PATENT APPLICATION**
published in accordance with Art. 153(4) EPC

(43) Date of publication:
**20.11.2013 Bulletin 2013/47**

(51) Int Cl.:
***H04N 7/46*** (2006.01)   ***H04N 7/26*** (2006.01)
***H04N 7/32*** (2006.01)

(21) Application number: **12734185.7**

(22) Date of filing: **16.01.2012**

(86) International application number:
**PCT/CN2012/070384**

(87) International publication number:
**WO 2012/095031 (19.07.2012 Gazette 2012/29)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.01.2011 CN 201110008142**

(71) Applicant: **Huawei Technologies Co., Ltd.**
**Shenzhen, Guangdong 518129 (CN)**

(72) Inventors:
• **LIN, Yongbing**
**Shenzhen**
**Guangdong 518129 (CN)**
• **LAI, Changcai**
**Shenzhen**
**Guangdong 518129 (CN)**

(74) Representative: **Pfenning, Meinig & Partner GbR**
**Theresienhöhe 13**
**80339 München (DE)**

(54) **SPATIAL PREDICTION ENCODING METHOD, DECODING METHOD, DEVICE, AND SYSTEM**

(57)   The present invention discloses a spatial domain prediction encoding method, decoding method, apparatus, and system. In embodiments of the present invention, a first reference point and a second reference point that correspond to a prediction point are obtained from an upper reference edge and a left reference edge of a prediction block respectively according to a position of the prediction point in the prediction block and a prediction texture direction that corresponds to a prediction mode, and then linear interpolation is performed, according to the position of the prediction point, on the first reference point and the second reference point to obtain a predicted value of the prediction point. Because two reference points are used for prediction in this solution, prediction precision is improved, and furthermore, this solution is easy to implement.

FIG. 2

# EP 2 665 276 A1

**Description**

**TECHNICAL FIELD**

The present invention relates to the field of communications technologies, and in particular, to a spatial domain prediction encoding method, decoding method, apparatus, and system.

**BACKGROUND**

As demands for transmission and storage of high definition videos increase, how to improve video encoding and compression efficiency is a core problem that needs to be urgently solved by a new-generation video encoding standard.

A basic principle of video encoding and compression is to use correlations among a spatial domain, a time domain, and a code to remove redundancy as much as possible. Currently, a popular approach is to adopt a block-based hybrid video encoding technology to implement video encoding and compression through steps, such as prediction, transformation, quantification, and entropy encoding. In an existing international video encoding standard (H.264), advanced video coding (AVC, Advanced Video Coding), and a high efficiency video coding and compression standard (HEVC, High Efficiency Video Coding), this block-based hybrid video encoding technology is adopted, which is briefly introduced in the following.

In an intra-prediction technology in the existing H.264, a correlation between adjacent blocks is used and multi-directional prediction is adopted to improve prediction precision, and this encoding technology is referred to as a multi-directional spatial domain encoding technology. In the H.264, prediction of a luminance component is performed in nine modes (also referred to as intra-prediction modes, Intra prediction mode). Among these prediction modes, except a direct current (DC, Direct Current) mode, each of the rest modes actually characterizes information about a different texture direction. At an encoding end, a prediction residual may be obtained through prediction performed according to a selected prediction mode, and then transformation, quantification, and entropy encoding may be performed on the residual to finally generate a compressed bitstream. At a decoding end, a decoded image may be obtained through decoding performed according to a prediction mode and prediction residual information.

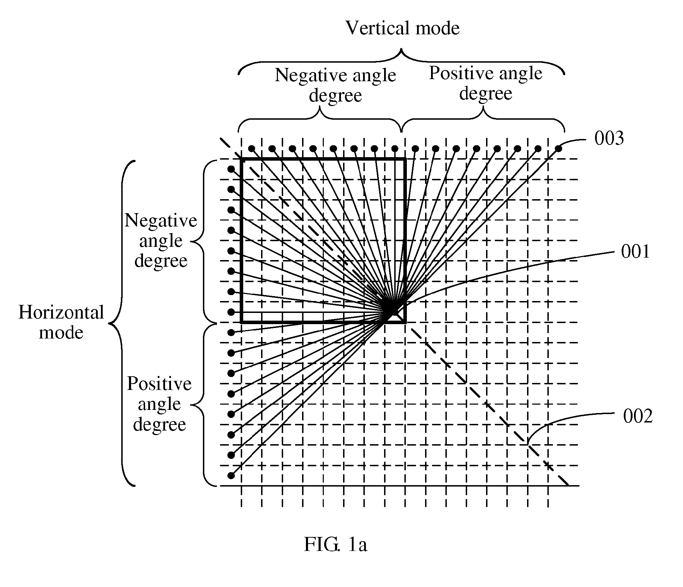

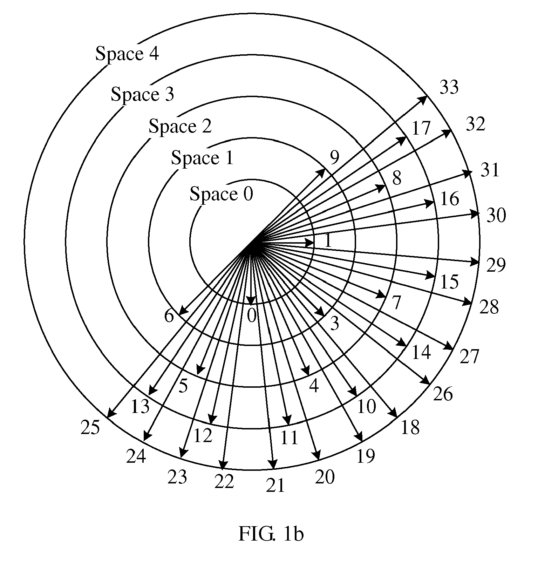

An intra-prediction technology in the HEVC is similar to that used in the H.264, but in the HEVC, the number of prediction directions is further expanded, and a maximum of 33 prediction directions is allowed. That is, 33 prediction modes (prediction mode) exist, and a total of 34 prediction modes exist by adding a DC mode. For distribution of these prediction directions, reference may be made to 1a, and it should be noted that, for ease of description, in embodiments of the present invention, these directions are classified. As shown in FIG. 1a, a thick-lined block represents a current block, each black line represents a prediction direction, and a black dot 003 represents an integer pixel position. It is shown in the figure that 33 prediction directions may exist for prediction of a pixel (pixel) 001 in a bottommost corner of the current block. Among the 33 prediction directions, prediction directions above a diagonal line 002 are classified as vertical modes (Vertical mode), prediction directions below the diagonal line 002 are classified as horizontal modes (Horizontal mode), and the vertical modes and the horizontal modes may further be classified as modes of positive angle degrees and modes of negative angle degrees. In this way, bitstream generation in each prediction direction may have a corresponding mode number. Referring to FIG. 1b, bitstream generation in different prediction directions corresponds to modes 0 to 1 and modes 3 to 33 (a mode 2 is a DC mode). Transformation may be performed, through an established mapping table, between bitstream generation in each prediction direction and a corresponding mode number.

In a process of researching and practicing the prior art, the inventor of the present invention finds that, for both the intra-prediction technology in the H.264 and the intra-prediction technology in the HEVC, because a reference pixel on only one side of a direction is used in prediction in this direction, prediction precision is not high.

**SUMMARY**

Embodiments of the present invention provide a spatial domain prediction encoding method, decoding method, apparatus, and system, so that prediction precision may be improved.

A spatial domain prediction encoding method includes:

obtaining a first reference point and a second reference point that correspond to a prediction point from an upper reference edge and a left reference edge of a prediction block respectively according to a position of the prediction point in the prediction block and a prediction texture direction that corresponds to a prediction mode;
performing, according to the position of the prediction point, linear interpolation on the first reference point and the second reference point to obtain a predicted value of the prediction point;
calculating a prediction residual of the prediction block by using the predicted value; and

2

encoding the prediction residual and the prediction mode of the prediction block.

A spatial domain prediction decoding method includes:

obtaining a prediction mode and a prediction residual of a prediction block;
obtaining a first reference point and a second reference point that correspond to a prediction point from an upper reference edge and a left reference edge of the prediction block respectively according to a position of the prediction point in the prediction block and a prediction texture direction that corresponds to the prediction mode;
performing, according to the position of the prediction point, linear interpolation on the first reference point and the second reference point to obtain a predicted value of the prediction point; and
calculating a decoded value of the prediction block according to the prediction residual and the predicted value.

An encoder includes:

an obtaining unit, configured to obtain a first reference point and a second reference point that correspond to a prediction point from an upper reference edge and a left reference edge of a prediction block respectively according to a position of the prediction point in the prediction block and a prediction texture direction that corresponds to a prediction mode;
a predicting unit, configured to perform, according to the position of the prediction point, linear interpolation on the first reference point and the second reference point that are obtained by the obtaining unit to obtain a predicted value of the prediction point;
a calculating unit, configured to calculate a prediction residual of the prediction block by using the predicted value that is obtained by the predicting unit; and
an encoding unit, configured to encode the prediction mode and the prediction residual of the prediction block, where the prediction residual of the prediction block is obtained by the calculating unit.

A decoder includes:

an obtaining unit, configured to obtain a prediction mode and a prediction residual of a prediction block;
a reference point obtaining unit, configured to obtain a first reference point and a second reference point that correspond to a prediction point from an upper reference edge and a left reference edge of the prediction block respectively according to a position of the prediction point in the prediction block and a prediction texture direction that corresponds to the prediction mode;
a predicting unit, configured to perform, according to the position of the prediction point, linear interpolation on the first reference point and the second reference point to obtain a predicted value of the prediction point; and
a decoding unit, configured to calculate a decoded value of the prediction block according to the prediction residual and the predicted value.

A communication system includes any one encoder provided in the embodiments of the present invention and any one decoder provided in the embodiments of the present invention.
In the embodiments of the present invention, a first reference point and a second reference point that correspond to a prediction point are obtained from an upper reference edge and a left reference edge of a prediction block respectively according to a position of the prediction point in the prediction block and a prediction texture direction that corresponds to a prediction mode, and then linear interpolation is performed, according to the position of the prediction point, on the first reference point and the second reference point to obtain a predicted value of the prediction point. Because two reference points are used for prediction in this solution, prediction precision is improved, and furthermore, this solution is easy to implement.

**BRIEF DESCRIPTION OF DRAWINGS**

To describe the technical solutions in the embodiments of the present invention or in the prior art more clearly, the following briefly introduces the accompanying drawings required for describing the embodiments or the prior art. Apparently, the accompanying drawings in the following descriptions show merely some of the embodiments of the present invention, and persons of ordinary skill in the art may still derive other drawings from these accompanying drawings without creative efforts.

FIG. 1a is a schematic diagram showing distribution of corresponding prediction directions during prediction;
FIG. 1b is a schematic diagram of mode numbers corresponding to bitstream generation in prediction directions;

FIG. 1c is a flowchart of a spatial domain prediction encoding method according to Embodiment 1 of the present invention;

FIG. 1d is a schematic diagram of a 45-degree prediction direction of a prediction point P(x, y);

FIG. 1e is a schematic diagram of a non-45-degree prediction direction of the prediction point P(x, y);

FIG. 2 is a flowchart of a spatial domain prediction decoding method according to Embodiment 2 of the present invention;

FIG. 3a is a flowchart of a spatial domain prediction encoding method according to Embodiment 3 of the present invention;

FIG. 3b is a flowchart of a spatial domain prediction decoding method according to Embodiment 3 of the present invention;

FIG. 4a is a flowchart of a spatial domain prediction encoding method according to Embodiment 4 of the present invention;

FIG. 4b is a flowchart of a spatial domain prediction decoding method according to Embodiment 4 of the present invention;

FIG. 5a is a schematic structural diagram of an encoder according to an embodiment of the present invention;

FIG. 5b is another schematic structural diagram of an encoder according to an embodiment of the present invention;

FIG. 5c is yet another schematic structural diagram of an encoder according to an embodiment of the present invention;

FIG. 6a is a schematic structural diagram of a decoder according to an embodiment of the present invention;

FIG. 6b is another schematic structural diagram of a decoder according to an embodiment of the present invention; and

FIG. 6c is yet another schematic structural diagram of a decoder according to an embodiment of the present invention.

## DESCRIPTION OF EMBODIMENTS

The following clearly and completely describes the technical solutions in the embodiments of the present invention with reference to the accompanying drawings in the embodiments of the present invention. Apparently, the embodiments to be described are merely a part rather than all of the embodiments of the present invention. All other embodiments obtained by persons skilled in the art based on the embodiments of the present invention without creative efforts shall fall within the protection scope of the present invention.

Embodiments of the present invention provide a spatial domain prediction encoding method, decoding method, apparatus, and system, which are separately described in detail in the following.

## Embodiment 1

This embodiment is described from the perspective of an encoder.

A spatial domain prediction encoding method includes: obtaining a first reference point and a second reference point that correspond to a prediction point from an upper reference edge and a left reference edge of a prediction block respectively according to a position of the prediction point in the prediction block and a prediction texture direction that corresponds to a prediction mode; performing, according to the position of the prediction point, linear interpolation on the first reference point and the second reference point to obtain a predicted value of the prediction point; calculating a prediction residual of the prediction block by using the predicted value; and encoding the prediction residual and the prediction mode of the prediction block.

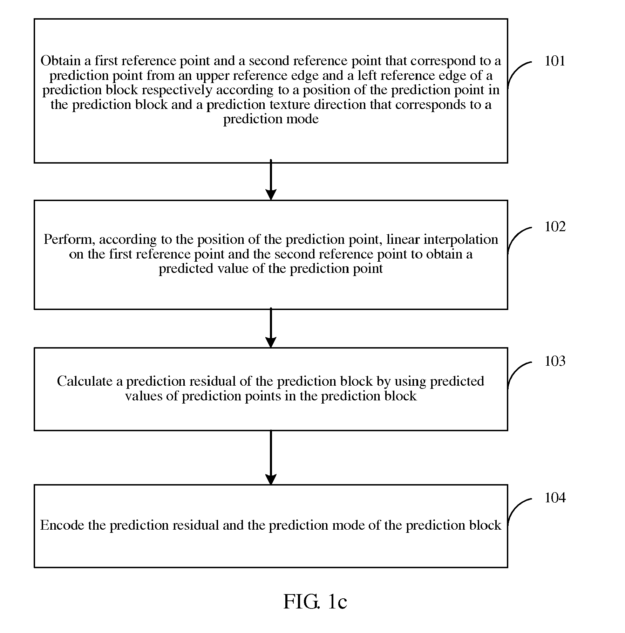

Referring to FIG. 1c, a specific procedure may be as follows:

101: Obtain a first reference point and a second reference point that correspond to a prediction point from an upper reference edge and a left reference edge of a prediction block respectively according to a position of the prediction point in the prediction block and a prediction texture direction that corresponds to a prediction mode.

For prediction modes of different angle degrees, manners for obtaining a first reference point and a second reference point are different. By taking a prediction point P(x, y) as an example, details may be as follows.

(1): 45-degree angle prediction mode

The 45-degree angle prediction mode refers to a prediction mode with a 45-degree prediction texture direction. It should be noted that a difference between a prediction texture direction and a prediction mode lies in that the prediction mode is directional, but the prediction texture direction is non-directional, and different prediction modes may have the same prediction texture direction.

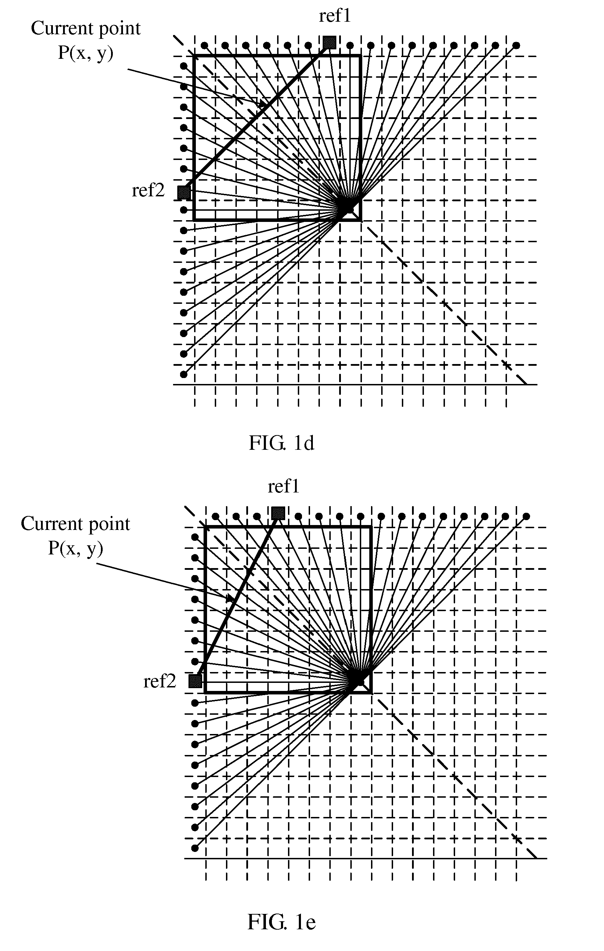

As shown in FIG. 1b, a prediction mode 6 and a prediction mode 9 correspond to the same 45-degree angle prediction texture direction, that is, the prediction mode 6 and the prediction mode 9 are 45-degree angle prediction modes. In this case, one prediction texture direction actually corresponds to two prediction modes. Furthermore, reference points (including the first reference point and the second reference point) obtained from reference edges are all located at integer pixel positions. Therefore, at this time, as shown in FIG. 1d, step 101 may specifically be as follows:

obtaining a first reference point ref1 that corresponds to the prediction point from the upper reference edge of the prediction block according to a position of the prediction point $P(x, y)$ in the prediction block and a prediction texture direction that corresponds to a 45-degree angle prediction mode, for example, according to the prediction texture direction that corresponds to the prediction mode 6 or the prediction mode 9; and
obtaining a second reference point ref2 that corresponds to the prediction point from the left reference edge of the prediction block according to the position of the prediction point $P(x, y)$ in the prediction block and the prediction texture direction that corresponds to the 45-degree angle prediction mode, for example, according to the prediction texture direction that corresponds to the prediction mode 6 or the prediction mode 9.

(2): Non-45-degree angle prediction mode

The non-45-degree angle prediction mode refers to another prediction mode other than a 45-degree angle prediction mode, that is, referring to FIG. 1e, a prediction mode with a non-45-degree prediction texture direction.

In this case, at least one of reference points (including the first reference point and the second reference point) obtained from reference edges is not located at an integer pixel position, that is, at least one reference point is located at a sub-pixel position. Therefore, at this time, interpolation needs to be considered for the point located at the sub-pixel position. That is, at this time, step 101 may specifically be as follows:

performing interpolation on an integer pixel on the upper reference edge of the prediction block, and obtaining, according to the position of the prediction point $P(x, y)$ in the prediction block and a prediction texture direction that corresponds to a non-45-degree angle prediction mode, a first reference point ref1 that corresponds to the prediction point $P(x, y)$ from the upper reference edge that is obtained after the interpolation; and obtaining, according to the position of the prediction point $P(x, y)$ in the prediction block and the prediction texture direction that corresponds to the non-45-degree angle prediction mode, a second reference point ref2 that corresponds to the prediction point $P(x, y)$ from the left reference edge of the prediction block, where at this time, the first reference point ref1 is located at a sub-pixel position, and the second reference point ref2 is located at an integer pixel position; or
obtaining, according to the position of the prediction point $P(x, y)$ in the prediction block and a prediction texture direction that corresponds to a non-45-degree angle prediction mode, a first reference point ref1 that corresponds to the prediction point $P(x, y)$ from the upper reference edge of the prediction block; and performing interpolation on an integer pixel on the left reference edge of the prediction block, and obtaining, according to the position of the prediction point $P(x, y)$ in the prediction block and the prediction texture direction that corresponds to the non-45-degree angle prediction mode, a second reference point ref2 that corresponds to the prediction point $P(x, y)$ from the left reference edge that is obtained after the interpolation, where at this time, the first reference point ref1 is located at an integer pixel position, and the second reference point ref2 is located at a sub-pixel position; or
performing interpolation on an integer pixel on the upper reference edge of the prediction block, and obtaining, according to the position of the prediction point $P(x, y)$ in the prediction block and a prediction texture direction that corresponds to a non-45-degree angle prediction mode, a first reference point ref1 that corresponds to the prediction point $P(x, y)$ from the upper reference edge that is obtained after the interpolation; and performing interpolation on an integer pixel on the left reference edge of the prediction block, and obtaining, according to the position of the prediction point $P(x, y)$ in the prediction block and the prediction texture direction that corresponds to the non-45-degree angle prediction mode, a second reference point ref2 that corresponds to the prediction point $P(x, y)$ from the left reference edge that is obtained after the interpolation, where at this time, the first reference point ref1 and the second reference point ref2 both are located at sub-pixel positions.

The non-45-degree angle prediction mode refers to another prediction mode other than a 45-degree angle prediction mode. For example, in this embodiment, the non-45-degree angle prediction mode refers to another prediction mode other than the prediction mode 6 and the prediction mode 9.

It should be noted that reference points can be simultaneously obtained from an upper reference edge and a left reference edge of a prediction block only in a prediction mode of a positive angle degree.

102: Perform, according to the position of the prediction point, linear interpolation on the first reference point and the second reference point to obtain a predicted value of the prediction point. For example, calculating a predicted value of the prediction point P(x, y) is taken as an example, which may specifically be as follows:

calculating a product of a value of the first reference point Ref1 and a second distance d2 to obtain a first product; calculating a product of a value of the second reference point Ref2 and a first distance d1 to obtain a second product; and dividing a sum of the first product and the second product by a sum of the first distance d1 and the second distance d1 to obtain a predicted value P'(x, y) of the prediction point P(x, y), which is represented by the following formula:

$$P'(x, y) = (Ref1 * d2 + Ref2 * d1)/(d1 + d2).$$

The first distance d1 is a distance from the prediction point P(x, y) to the first reference point, and the second distance d2 is a distance from the prediction point P(x, y) to the second reference point. The "distance" herein refers to a distance in a physical sense, and it may also be understood that the first distance d1 represents a projection of the distance from the current point P(x, y) to the first reference point ref1 in a horizontal or vertical direction and the second distance d2 represents a projection of the distance from the current point P(x, y) to the second reference point ref2 in a horizontal or vertical direction.

Alternatively, the formula may also be transformed to:

$$P'(x, y) = Ref1 * weight + Ref2 * (1 - weight).$$

In the formula, weight represents an interpolation coefficient, and weight = d2/(d1 + d2). That is, the interpolation coefficient weight depends on the distance from the P(x, y) to the first reference point ref1 and the distance from the P (x, y) to the second reference point ref2. That is to say, the calculating the predicted value P'(x, y) of the prediction point P(x, y) may also specifically be as follows:

calculating an interpolation coefficient according to the distance from the prediction point to the first reference point and the distance from the prediction point to the second reference point, and calculating the predicted value P'(x, y) of the prediction point P(x, y) according to the interpolation coefficient.

Likewise, a predicted value of another prediction point in the prediction block may also be calculated by adopting the foregoing method.

103: Calculate a prediction residual of the prediction block by using predicted values of prediction points in the prediction block, where the predicted values are calculated in step 102, and for details, reference may be made to the prior art, which are not described herein again.

104: Encode the prediction residual and the prediction mode of the prediction block, and for details, reference may be made to the prior art, which are not described herein again.

It should be noted that the prediction mode in the spatial domain prediction encoding method is a new prediction mode that is set according to a prediction manner in the spatial domain prediction encoding method, and the new prediction mode may coexist with original prediction modes (that is, prediction modes in the prior art) as an additional prediction mode, and one of the original prediction modes may also be replaced with the new prediction mode, or the new prediction mode is multiplexed with at least one of the original prediction modes. That is, the new prediction mode may exist in any one of the following manners.

(1): Used as an additional new prediction mode, that is, the new prediction mode is added under a premise that the original prediction modes are unchanged. For example, if originally 33 prediction modes exist, the new prediction mode may be used as a 34th prediction mode. However, encoding in this manner requires an additional encoding bit (bit) overhead.

(2): One of the original prediction modes is replaced with the new prediction mode.

For example, one prediction mode of 45-degree angle prediction modes may be replaced with the new prediction mode, for example, the prediction mode 6 or the prediction mode 9 is replaced. Encoding in this manner does not require an additional encoding bit overhead. Therefore, compared with the manner (1), encoding in this manner may save an encoding bit (bit) overhead. (3): The new prediction mode may be multiplexed with at least one of the original prediction modes.

Optionally, to maintain better encoding and compressing performance, it is preferred that a prediction texture direction of a prediction mode that is multiplexed with the new prediction mode is the same as that of the new prediction mode. For example, if the prediction texture direction of the new prediction mode is the same as that of the 45-degree angle prediction modes, the new prediction mode may be multiplexed with at least one of the 45-degree angle prediction modes, that is, the new prediction mode is multiplexed with the prediction mode 6 and/or the prediction mode 9. Encoding in this manner does not require an additional encoding bit overhead.

It can be known from the foregoing that in this embodiment, a first reference point and a second reference point that correspond to a prediction point are obtained from an upper reference edge and a left reference edge of a prediction block respectively according to a position of the prediction point in the prediction block and a prediction texture direction that corresponds to a prediction mode, and then linear interpolation is performed, according to the position of the prediction point, on the first reference point and the second reference point to obtain a predicted value of the prediction point. Because two reference points are used for prediction in this solution, compared with the prior art in which only one reference point is used for prediction, prediction precision is improved, and furthermore, this solution is easy to implement and is applicable to both a luminance component and a chrominance component.

**Embodiment 2**

In this embodiment, description is made from the perspective of a decoder.

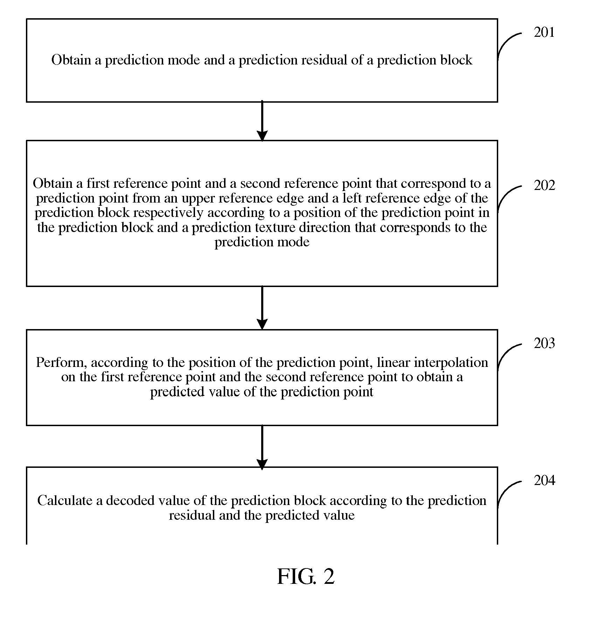

A spatial domain prediction decoding method includes: obtaining a prediction mode and a prediction residual of a prediction block; obtaining a first reference point and a second reference point that correspond to a prediction point from an upper reference edge and a left reference edge of the prediction block respectively according to a position of the prediction point in the prediction block and a prediction texture direction that corresponds to the prediction mode; performing, according to the position of the prediction point, linear interpolation on the first reference point and the second reference point to obtain a predicted value of the prediction point; and calculating a decoded value of the prediction block according to the prediction residual and the predicted value. Referring to FIG. 2, a specific procedure may include:

201: Obtain a prediction mode and a prediction residual of a prediction block.

202: Obtain a first reference point and a second reference point that correspond to a prediction point from an upper reference edge and a left reference edge of the prediction block respectively according to a position of the prediction point in the prediction block and a prediction texture direction that corresponds to the prediction mode.

For prediction modes of different angle degrees, manners for obtaining a first reference point and a second reference point are different. By taking a prediction point P(x, y) as an example, details may be as follows.

(1): 45-degree angle prediction mode

As shown in FIG. 1b, a prediction mode 6 and a prediction mode 9 correspond to the same 45-degree angle prediction texture direction, that is, the prediction mode 6 and the prediction mode 9 are 45-degree angle prediction modes. In this case, one prediction texture direction actually corresponds to two prediction modes. Furthermore, reference points (including the first reference point and the second reference point) obtained from reference edges are all located at integer pixel positions. Therefore, at this time, as shown in FIG. 1d, step 101 may specifically be as follows:

obtaining a first reference point ref1 that corresponds to the prediction point from the upper reference edge of the prediction block according to a position of the prediction point P(x, y) in the prediction block and a prediction texture direction that corresponds to a 45-degree angle prediction mode, for example, according to the prediction texture direction that corresponds to the prediction mode 6 or the prediction mode 9; and obtaining a second reference point ref2 that corresponds to the prediction point from the left reference edge of the prediction block according to the position of the prediction point P(x, y) in the prediction block and the prediction texture direction that corresponds to the 45-degree angle prediction mode, for example, according to the prediction texture direction that corresponds to the prediction mode 6 or the prediction mode 9.

(2): Non-45-degree angle prediction mode, that is, referring to FIG. 1e, another prediction mode other than a 45-degree angle prediction mode.

In this case, at least one of reference points (including the first reference point and the second reference point) obtained from reference edges is not located at an integer pixel position, that is, at least one reference point is located at a sub-pixel position. Therefore, at this time, interpolation needs to be considered for the point located at the sub-pixel position. That is, at this time, step 101 may specifically be as follows:

performing interpolation on an integer pixel on the upper reference edge of the prediction block, and obtaining, according to the position of the prediction point P(x, y) in the prediction block and a prediction texture direction that corresponds to a non-45-degree angle prediction mode, a first reference point ref1 that corresponds to the prediction point P(x, y) from the upper reference edge that is obtained after the interpolation; and obtaining, according to the position of the prediction point P(x, y) in the prediction block and the prediction texture direction that corresponds to the non-45-degree angle prediction mode, a second reference point ref2 that corresponds to the prediction point P(x, y) from the left reference edge of the prediction block, where at this time, the first reference point ref1 is located at a sub-pixel position, and the second reference point ref2 is located at an integer pixel position; or

obtaining, according to the position of the prediction point P(x, y) in the prediction block and a prediction texture direction that corresponds to a non-45-degree angle prediction mode, a first reference point ref1 that corresponds to the prediction point P(x, y) from the upper reference edge of the prediction block; and performing interpolation on an integer pixel on the left reference edge of the prediction block, and obtaining, according to the position of the prediction point P(x, y) in the prediction block and the prediction texture direction that corresponds to the non-45-degree angle prediction mode, a second reference point ref2 that corresponds to the prediction point P(x, y) from the left reference edge that is obtained after the interpolation, where at this time, the first reference point ref1 is located at an integer pixel position, and the second reference point ref2 is located at a sub-pixel position; or

performing interpolation on an integer pixel on the upper reference edge of the prediction block, and obtaining, according to the position of the prediction point P(x, y) in the prediction block and a prediction texture direction that corresponds to a non-45-degree angle prediction mode, a first reference point ref1 that corresponds to the prediction point P(x, y) from the upper reference edge that is obtained after the interpolation; and performing interpolation on an integer pixel on the left reference edge of the prediction block, and obtaining, according to the position of the prediction point P(x, y) in the prediction block and the prediction texture direction that corresponds to the non-45-degree angle prediction mode, a second reference point ref2 that corresponds to the prediction point P(x, y) from the left reference edge that is obtained after the interpolation, where at this time, the first reference point ref1 and the second reference point ref2 both are located at sub-pixel positions.

The non-45-degree angle prediction mode refers to another prediction mode other than a 45-degree angle prediction mode, for example, another prediction mode other than the prediction mode 6 and the prediction mode 9.

203: Perform, according to the position of the prediction point, linear interpolation on the first reference point and the second reference point to obtain a predicted value of the prediction point. For example, calculating a predicted value of the prediction point P(x, y) is taken as an example, which may specifically be as follows:

calculating a product of a value of the first reference point Ref1 and a second distance d2 to obtain a first product; calculating a product of a value of the second reference point Ref2 and a first distance d1 to obtain a second product; and dividing a sum of the first product and the second product by a sum of the first distance d1 and the second distance d1 to obtain a predicted value P'(x, y) of the prediction point P(x, y), which is represented by the following formula:

$$P'(x, y) = (Ref1 * d2 + Ref2 * d1)/(d1 + d2).$$

The first distance d1 is a distance from the prediction point P(x, y) to the first reference point, and the second distance d2 is a distance from the prediction point P(x, y) to the second reference point. The "distance" herein refers to a distance in a physical sense, and it may also be understood that the first distance d1 represents a projection of the distance from the current point P(x, y) to the first reference point ref1 in a horizontal or vertical direction and the second distance d2 represents a projection of the distance from the current point P(x, y) to the second reference point ref2 in a horizontal or vertical direction.
Alternatively, the formula may also be transformed to:

$$P'(x, y) = Ref1 * weight + Ref2 * (1 - weight).$$

In the formula, weight represents an interpolation coefficient, and weight = d2/(d1 + d2). That is, the interpolation coefficient weight depends on the distances from the P(x, y) to the first reference point ref1 and the distance from the P(x, y) to the second reference point ref2. That is to say, the calculating the predicted value P'(x, y) of the prediction point P(x, y) may also specifically be as follows:

calculating an interpolation coefficient according to the distance from the prediction point to the first reference point and the distance from the prediction point to the second reference point, and calculating the predicted value P'(x, y) of the prediction point P(x, y) according to the interpolation coefficient.

Likewise, a predicted value of another prediction point in the prediction block may also be calculated by adopting the foregoing method.

204: Calculate a decoded value of the prediction block according to the prediction residual obtained in step 201 and the predicted value obtained in step 203, which may specifically be as follows:

adding the prediction residual to the predicted value to obtain the decoded value of the prediction block.

It should be noted that the prediction mode in the spatial domain prediction encoding method is a new prediction mode that is set according to a prediction manner in the spatial domain prediction encoding method, and the new prediction mode may coexist with original prediction modes as an additional prediction mode, and one of the original prediction modes may also be replaced with the new prediction mode, or the new prediction mode is multiplexed with at least one of other prediction modes (that is, the original prediction modes). For details, reference may be made to the description in Embodiment 1, which is not described herein again.

If the new prediction mode is multiplexed with at least one of the original prediction modes, for example, the new prediction mode is multiplexed with the prediction mode 6, when an upper reference block and a left reference block of the prediction block can both be obtained, if the prediction mode obtained by the decoder is the prediction mode 6, it is indicated that the current block uses the new prediction mode, and when at least one of: the upper reference block and the left reference block of the current block cannot be obtained, if the prediction mode obtained by the decoder is the prediction mode 6, it is indicated that the current block uses a prediction manner of the original prediction mode 6. That is to say, when the upper reference block and the left reference block of the prediction block can both be obtained, the prediction mode obtained by the decoder may be the new prediction mode. Therefore, optionally, in the spatial domain prediction decoding method, before the obtaining the prediction mode of the prediction block (step 201), the method may further include:

determining that an upper reference block and a left reference block of the prediction block can both be obtained.

It can be known from the foregoing that in this embodiment, a first reference point and a second reference point that correspond to a prediction point are obtained from an upper reference edge and a left reference edge of a prediction block respectively according to a position of the prediction point in the prediction block and a prediction texture direction that corresponds to the prediction mode, and then linear interpolation is performed, according to the position of the prediction point, on the first reference point and the second reference point to obtain a predicted value of the prediction point. Because two reference points are used for prediction in this solution, compared with the prior art in which only one reference point is used for prediction, prediction precision is improved, and furthermore, this solution is easy to implement and is applicable to both a luminance component and a chrominance component.

According to the methods described in the foregoing embodiments, examples are taken for detailed description in Embodiment 3 to Embodiment 7 in the following.

**Embodiment 3**

In this embodiment, a 45-degree angle prediction mode, that is, a prediction mode 6 or a prediction mode 9, is taken as an example for description. A prediction process is as follows.

(1): Encoding process

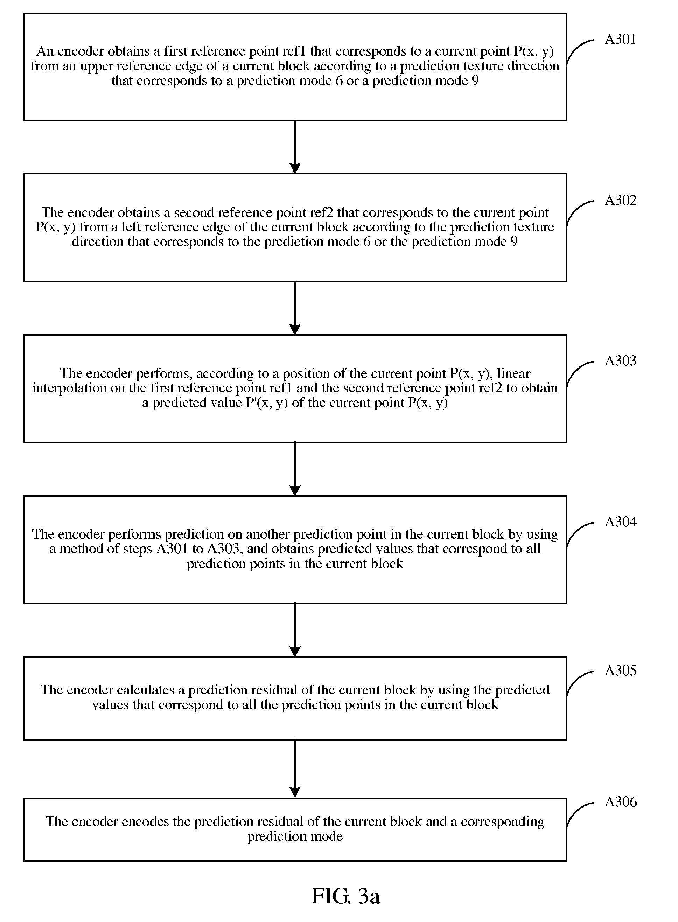

Prediction for a prediction point P(x, y) is taken as an example for description, and it should be understood that prediction for another prediction point is the same as that for the prediction point P(x, y).
Referring to FIG. 3a, a specific procedure is as follows.

A301: An encoder obtains a first reference point ref1 that corresponds to the current point P(x, y) from an upper reference edge of a current block according to a prediction texture direction that corresponds to the prediction mode 6 or the prediction mode 9.

A302: The encoder obtains a second reference point ref2 that corresponds to the current point P(x, y) from a left reference edge of the current block according to the prediction texture direction that corresponds to the prediction mode 6 or the prediction mode 9.

The first reference point Ref1 and the second reference point ref2 are both integer pixel positions.

A303: The encoder performs, according to a position of the current point P(x, y), linear interpolation on the first reference point ref1 and the second reference point ref2 to obtain a predicted value P'(x, y) of the current point P (x, y), which may specifically be as follows:

obtaining a distance (which refers to a distance in a physical sense) from the current point P(x, y) to the first reference point ref1, that is, a first distance d1, obtaining a distance (which refers to a distance in a physical sense) from the current point P(x, y) to the second reference point ref2, that is, a second distance d2, and calculating the predicted value P'(x, y) according to a value of the first reference point ref1, a value of the second reference point ref2, the first distance d1, and the second distance d2, which is as follows:

$$P'(x, y) = (Ref1 * d2 + Ref2 * d1)/(d1 + d2).$$

Alternatively, the formula may also be transformed to:

$$P'(x, y) = Ref1 * weight + Ref2 * (1 - weight).$$

In the formula, weight represents an interpolation coefficient, and weight = d2/(d1 + d2). That is, the interpolation coefficient weight depends on the distance from the P(x, y) to the first reference point ref1 and the distance from the P (x, y) to the second reference point ref2. That is to say, the calculating the predicted value P'(x, y) of the prediction point P(x, y) may also specifically be as follows:

calculating an interpolation coefficient according to the distance from the prediction point to the first reference point and the distance from the prediction point to the second reference point, and calculating the predicted value P'(x, y) of the prediction point P(x, y) according to the interpolation coefficient.

A304: The encoder performs prediction on another prediction point in the current block by using a method of steps A301 to A303, and obtains predicted values that correspond to all prediction points in the current block.

A305: The encoder calculates a prediction residual of the current block by using the predicted values that correspond to all the prediction points in the current block and are obtained in step A304.

A306: The encoder encodes the prediction residual of the current block and a corresponding prediction mode (that is, the prediction mode 6 or the prediction mode 9) to obtain a corresponding bitstream.

For another prediction block, encoding is also performed by adopting a method of steps A301 to A306.

(2): Decoding process

After receiving a bitstream sent by an encoder, a decoder in a peer device decodes the bitstream, which may specifically be as follows.

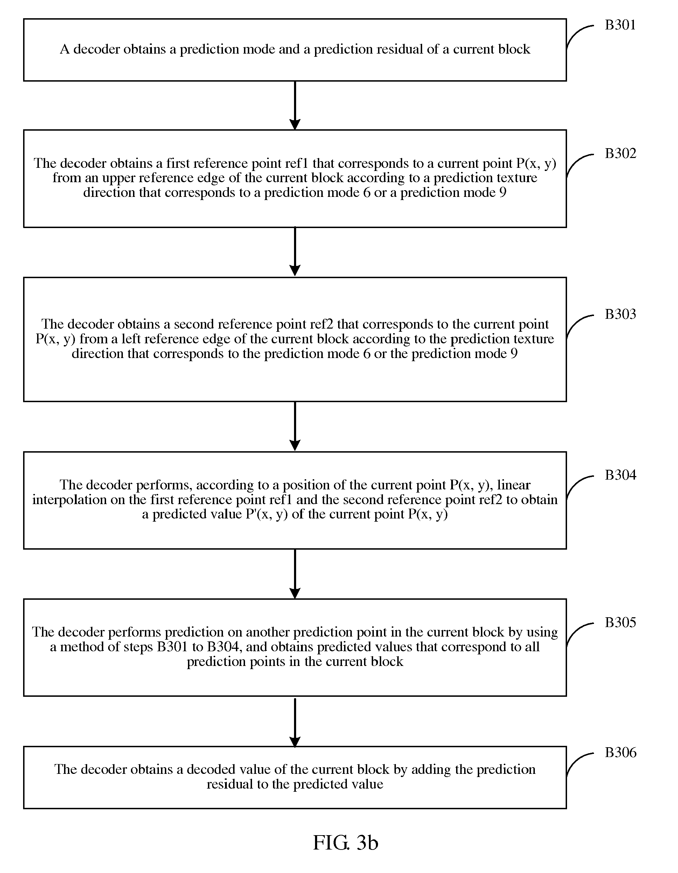

A prediction point P(x, y) is still taken as an example for description, and it should be understood that prediction for another prediction point is the same as that for the prediction point P(x, y). Referring to FIG. 3b, a specific procedure is as follows.

B301: The decoder obtains a prediction mode and a prediction residual of a current block. For example, if a prediction mode adopted during encoding is the prediction mode 6, the prediction mode obtained at this time is the prediction mode 6, and likewise, if the prediction mode adopted during encoding is the prediction mode 9, the prediction mode obtained at this time is the prediction mode 9.

B302: The decoder obtains a first reference point ref1 that corresponds to the current point P(x, y) from an upper reference edge of the current block according to a prediction texture direction that corresponds to the prediction mode 6 or the prediction mode 9.

B303: The decoder obtains a second reference point ref2 that corresponds to the current point P(x, y) from a left reference edge of the current block according to the prediction texture direction that corresponds to the prediction mode 6 or the prediction mode 9.

The first reference point Ref1 and the second reference point ref2 are both integer pixel positions. B304: The decoder performs, according to a position of the current point P(x, y), linear interpolation on the first reference point ref1 and the second reference point ref2 to obtain a predicted value P'(x, y) of the current point P(x, y), which may specifically be as follows:

obtaining a distance (which refers to a distance in a physical sense) from the current point P(x, y) to the first reference point ref1, that is, a first distance d1, obtaining a distance (which refers to a distance in a physical sense) from the current point P(x, y) to the second reference point ref2, that is, a second distance d2, and calculating the predicted value P'(x, y) according to a value of the first reference point ref1, a value of the second reference point ref2, the first distance d1, and the second distance d2, which is as follows:

$$P'(x, y) = (Ref1 * d2 + Ref2 * d1)/(d1 + d2).$$

Alternatively, the formula may also be transformed to:

$$P'(x, y) = Ref1 * weight + Ref2 * (1 - weight).$$

In the formula, weight represents an interpolation coefficient, and weight = d2/(d1 + d2). That is, the interpolation coefficient weight depends on the distance from the current point P(x, y) to the first reference point ref1 and the distance from the current point P(x, y) to the second reference point ref2. That is to say, the calculating the predicted value P'(x, y) of the current point P(x, y) may also specifically be as follows:

calculating an interpolation coefficient according to the distance from the current point P(x, y) to the first reference point and the distance from the current point P(x, y) to the second reference point, and calculating the predicted value P'(x, y) of the current point P(x, y) according to the interpolation coefficient.

B305: The decoder performs prediction on another prediction point in the current block by using a method of steps B301 to B304, and obtains predicted values that correspond to all prediction points in the current block.

B306: The decoder obtains a decoded value of the current block by adding the prediction residual to the predicted value.

For another prediction block, decoding is also performed by adopting a method of steps B301 to B306.

It can be known from the foregoing that in this embodiment, a first reference point and a second reference point that correspond to a prediction point are obtained from an upper reference edge and a left reference edge of a prediction block respectively according to a position of the prediction point in the current block and a prediction texture direction that corresponds to a 45-degree angle prediction mode, and then linear interpolation is performed, according to the position of the prediction point, on the first reference point and the second reference point to obtain a predicted value of the prediction point. Because two reference points are used for prediction in this solution, compared with the prior art in which only one reference point is used for prediction, prediction precision is improved, and furthermore, this solution is easy to implement and is applicable to both a luminance component and a chrominance component.

**Embodiment 4**

In Embodiment 3, referring to FIG. 1d, due to specificity of a 45-degree angle, the first reference point and the second reference point obtained from the reference edges are both located at integer pixel positions. A difference between this embodiment and Embodiment 3 is that in this embodiment, a non-45-degree angle prediction mode (that is, another prediction mode of a positive angle degree other than a prediction mode 6 or a prediction mode 9) is mainly taken as an example for description. In this case, at least one of: a first reference point and a second reference point that are obtained from reference edges is located at a sub-pixel position. Therefore, interpolation needs to be considered at this time.

The spatial domain prediction encoding method and decoding method are described in detail in the following.

(1): Encoding process

Prediction for a prediction point P(x, y) is taken as an example for description, and it should be understood that prediction for another prediction point is the same as that for the prediction point P(x, y).

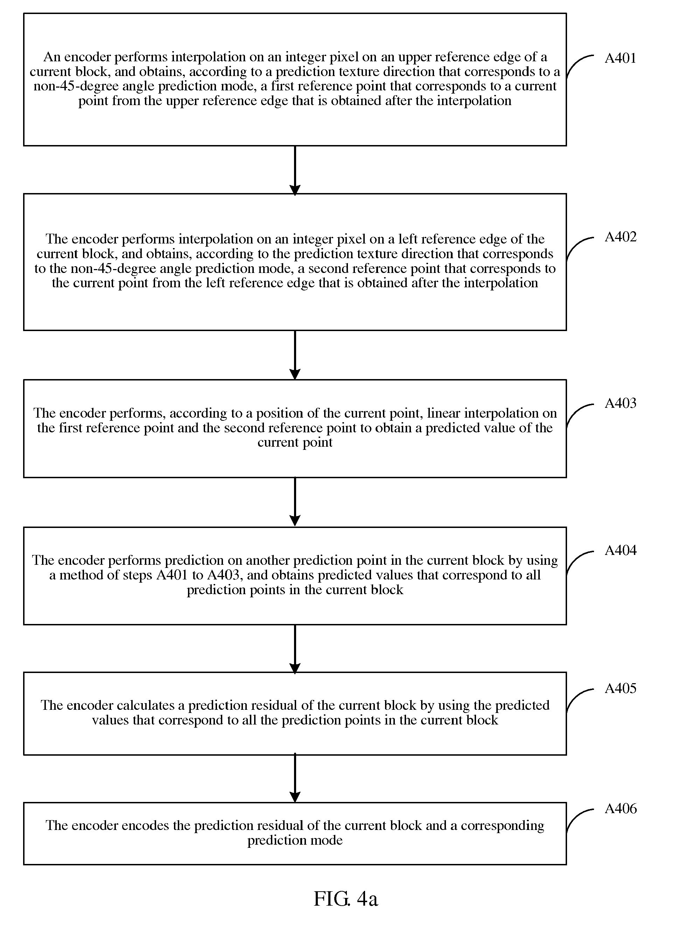

In addition, it should further be noted that, for ease of description, that a first reference point ref1 and a second reference point ref2 are both located at sub-pixel positions is taken as an example for description. It should be understood that it is also possible that one of the first reference point ref1 and the second reference point ref 2 is located at an integer pixel position, and if the first reference point ref1 or the second reference point ref2 is located at an integer pixel position, interpolation may not be considered when the reference point located at the integer pixel position is calculated. Referring to FIG. 4a, a specific procedure is as follows.

A401: An encoder performs interpolation on an integer pixel on an upper reference edge of a current block, and obtains, according to a prediction texture direction that corresponds to a non-45-degree angle prediction mode, for example, a prediction texture direction that corresponds to a prediction mode 33, a first reference point ref1 that corresponds to the current point P(x, y) from the upper reference edge that is obtained after the interpolation.

A402: The encoder performs interpolation on an integer pixel on the upper reference edge of the current block, and obtains, according to the prediction texture direction that corresponds to the non-45-degree angle prediction mode, for example, the prediction texture direction that corresponds to the prediction mode 33, a first reference point ref2 that corresponds to the current point P(x, y) from the left reference edge that is obtained after the interpolation.

The first reference point Ref1 and the second reference point ref2 are both located at sub-pixel positions.

A403: The encoder performs, according to a position of the current point P(x, y), linear interpolation on the first reference point ref1 and the second reference point ref2 to obtain a predicted value P'(x, y) of the current point P (x, y), which may specifically be as follows:

obtaining a distance (which refers to a distance in a physical sense) from the current point P(x, y) to the first reference point ref1, that is, a first distance d1, obtaining a distance (which refers to a distance in a physical sense) from the current point P(x, y) to the second reference point ref2, that is, a second distance d2, and calculating the predicted value P'(x, y) according to a value of the first reference point Ref1, a value of the second reference point ref2, the first distance d1, and the second distance d2, which is as follows:

$$P'(x, y) = (Ref1 * d2 + Ref2 * d1)/(d1 + d2).$$

Alternatively, the formula may also be transformed to:

$$P'(x, y) = Ref1 * weight + Ref2 * (1 - weight).$$

In the formula, weight represents an interpolation coefficient, and weight = d2/(d1 + d2). That is, the interpolation coefficient weight depends on the distance from the current point P(x, y) to the first reference point ref1 and the distance from the current point P(x, y) to the second reference point ref2. That is to say, the calculating the predicted value P'(x, y) of the current point P(x, y) may also specifically be as follows:

calculating an interpolation coefficient according to the distance from the current point P(x, y) to the first reference point and the distance from the current point P(x, y) to the second reference point, and calculating the predicted value P'(x, y) of the current point P(x, y) according to the interpolation coefficient.

A404: The encoder performs prediction on another prediction point in the current block by using a method of steps A401 to A403, and obtains predicted values that correspond to all prediction points in the current block.

A405: The encoder calculates a prediction residual of the current block by using the predicted values that correspond to all the prediction points in the current block and are obtained in step A404.

A406: The encoder encodes the prediction residual of the current block and a corresponding prediction mode, for example, a prediction mode 3, to obtain a corresponding bitstream.

For another prediction block, encoding is also performed by adopting a method of steps A401 to A406.

(2): Decoding process

After receiving a bitstream sent by an encoder, a decoder in a peer device decodes the bitstream, which may specifically be as follows.

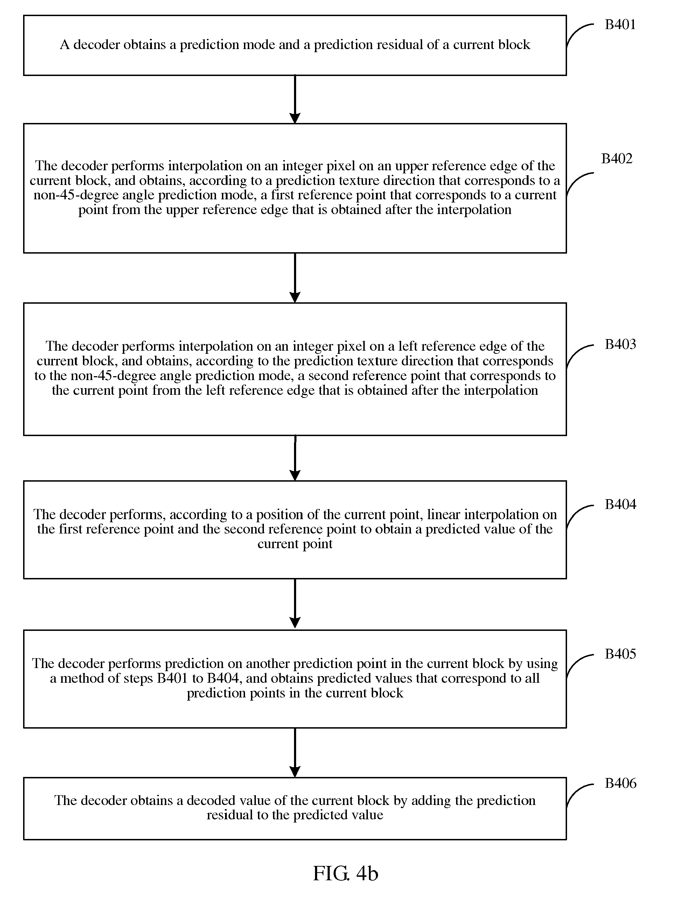

A prediction point P(x, y) is still taken as an example for description, and it should be understood that prediction for another prediction point is the same as that for the prediction point P(x, y). Referring to FIG. 4b, a specific procedure is as follows.

B401: The decoder obtains a prediction mode and a prediction residual of a current block. For example, if a prediction mode adopted during decoding is the prediction mode 33, the prediction mode obtained at this time is the prediction mode 33, and so on.

B402: The decoder performs interpolation on an integer pixel on an upper reference edge of the current block, and obtains, according to a prediction texture direction that corresponds to the obtained prediction mode, a first reference point ref1 that corresponds to the current point P(x, y) from the upper reference edge that is obtained after the interpolation.

B403: The decoder performs interpolation on an integer pixel on the upper reference edge of the current block, and obtains, according to the prediction texture direction that corresponds to the obtained prediction mode, a first reference point ref2 that corresponds to the current point P(x, y) from the left reference edge that is obtained after the interpolation.

The first reference point Ref1 and the second reference point ref2 are both sub-pixel positions.

B404: The decoder performs, according to a position of the current point P(x, y), linear interpolation on the first reference point ref1 and the second reference point ref2 to obtain a predicted value P'(x, y) of the current point P(x, y), which may specifically be as follows:

obtaining a distance (which refers to a distance in a physical sense) from the current point P(x, y) to the first reference point ref1, that is, a first distance d1, obtaining a distance (which refers to a distance in a physical sense) from the current point P(x, y) to the second reference point ref2, that is, a second distance d2, and calculating the predicted value P'(x, y) according to a value of the first reference point ref1, a value of the second reference point ref2, the first distance d1, and the second distance d2, which is as follows:

$$P'(x, y) = (Ref1 * d2 + Ref2 * d1)/(d1 + d2).$$

Alternatively, the formula may also be transformed to:

$$P'(x, y) = Ref1 * weight + Ref2 * (1 - weight).$$

In the formula, weight represents an interpolation coefficient, and weight = d2/(d1 + d2). That is, the interpolation coefficient weight depends on the distance from the current point P(x, y) to the first reference point ref1 and the distance from the current point P(x, y) to the second reference point ref2. That is to say, the calculating the predicted value P'(x, y) of the prediction point P(x, y) may also specifically be as follows:

calculating an interpolation coefficient according to the distance from the current point P(x, y) to the first reference point and the distance from the current point P(x, y) to the second reference point, and calculating the predicted value P'(x, y) of the current point P(x, y) according to the interpolation coefficient.

B405: The decoder performs prediction on another prediction point in the current block by using a method of steps B401 to B404, and obtains predicted values that correspond to all prediction points in the current block.

B406: The decoder obtains a decoded value of the current block by adding the prediction residual to the predicted value.

For another prediction block, decoding is also performed by adopting a method of steps B401 to B406.

It can be known from the foregoing that in this embodiment, a first reference point and a second reference point that correspond to a prediction point are obtained from an upper reference edge and a left reference edge of a prediction block respectively according to a position of the prediction point in the current block and a prediction texture direction that corresponds to a non-45-degree angle prediction mode, and then linear interpolation is performed, according to the position of the prediction point, on the first reference point and the second reference point to obtain a predicted value of the prediction point. Because two reference points are used for prediction in this solution, compared with the prior art in which only one reference point is used for prediction, prediction precision is improved, and furthermore, this solution is easy to implement and is applicable to both a luminance component and a chrominance component.

**Embodiment 5**

In Embodiment 3 and Embodiment 4, a corresponding prediction mode may be set according to a prediction manner provided in the embodiment of the present invention, and may be used as a new prediction mode. The new prediction mode may coexist with original prediction modes as an additional prediction mode, and one of the original prediction modes may also be replaced with the new prediction mode, or the new prediction mode may be multiplexed with at least one of the original prediction modes. That is, the new prediction mode may exist in any one of the following manners.

   (1): Used as an additional prediction mode, that is, the new prediction mode is added under a premise that the original prediction modes (prediction modes in the prior art) are unchanged. However, because one prediction mode is newly added to the original prediction modes in this method, encoding in this manner requires an additional encoding bit (bit) overhead.
   (2): One of the original prediction modes is replaced with the new prediction mode, for example, a prediction mode 6 or a prediction mode 9, which has the same prediction texture direction as the new prediction mode, may be replaced with the new prediction mode. Because the total number of the original prediction modes is not changed in this manner, encoding in this manner does not require an additional encoding bit overhead. Therefore, compared with the manner (1), encoding in this manner may save an encoding bit (bit) overhead.
   (3): The new prediction mode is multiplexed with at least one of the original prediction modes, for example, the new prediction mode may be multiplexed with the prediction mode 6 or the prediction mode 9, which has the same prediction texture direction as the new prediction mode. Because the total number of the original prediction modes is not changed in this manner either, encoding in this manner does not require an additional encoding bit overhead, and furthermore, may maintain better encoding and compressing performance.

It can be known from the foregoing that in this embodiment, in addition to the same beneficial effects as that in Embodiment 3 and Embodiment 4 that may be implemented, an appropriate manner may also be selected according to an actual application demand to blend a new prediction mode into existing prediction modes. For example, if an additional encoding bit overhead is not concerned, the manner (1) may be selected; on the contrary, if it is not intended to add an additional encoding bit overhead, the manner (2) or (3) may be selected; and further, to maintain better encoding and compressing performance, the manner (3) may be selected, so that implementation is relatively flexible.

Embodiment 6

Because a prediction mode 6 and a prediction mode 9 correspond to the same prediction texture direction, if one of the prediction mode 6 and the prediction mode 9 is replaced, compared with a case in which another prediction mode is replaced, a performance loss caused to a system is smaller. Therefore, based on Embodiment 5, further, to minimize a performance loss caused by replacement of a prediction mode, the original prediction mode 6 or prediction mode 9 may be replaced with a new prediction mode, which is as follows.

(1): Encoding process

At this time, in step A306 in Embodiment 3 and A406 in Embodiment 4, the encoding a prediction mode may specifically be:

   (1): If the prediction mode 6 is replaced with the new prediction mode, an encoder encodes the new prediction mode (that is, the new prediction mode is used as the prediction mode 6 at this time).

(2): If the prediction mode 9 is replaced with the new prediction mode, the encoder encodes the new prediction mode (that is, the new prediction mode is used as the prediction mode 9 at this time).

It should be noted that another encoding step is the same as that in Embodiment 3 and that in Embodiment 4, which is not described herein again.

(2): Decoding process

The decoding process is the same as that in Embodiment 3 and that in Embodiment 4.

Because the prediction mode 6 or the prediction mode 9 has already been replaced with the new prediction mode (that is, the new prediction mode is used as the original prediction mode 6 or prediction mode 9), when a prediction mode of a current block obtained by a decoder is the prediction mode 6 or the prediction mode 9, it is indicated that the current block uses the new prediction mode.

It can be known from the foregoing that in this embodiment, in addition to beneficial effects of Embodiment 3 and Embodiment 4 that may be implemented, because a manner of replacing the original prediction mode 6 or prediction mode 9 with the new prediction mode is adopted, compared with a manner of directly adding the new prediction mode, an encoding bit overhead may not need to be additionally added. In addition, because the prediction mode 6 and the prediction mode 9 correspond to the same prediction texture direction, if one of the prediction mode 6 and the prediction mode 9 is replaced, it can be ensured that a performance loss is smaller.

**Embodiment 7**

Because a prediction mode 6 and a prediction mode 9 correspond to the same prediction texture direction, if a new prediction mode is multiplexed with one of the prediction mode 6 and the prediction mode 9, an additional encoding bit overhead may not need to be occupied, and furthermore, most functions of original prediction modes can be maintained. Therefore, based on Embodiment 5, further, to maintain most functions of original prediction modes, a new prediction mode may be multiplexed with one of the prediction mode 6 or the prediction mode 9, which is as follows.

(1): Encoding process

At this time, in step A306 in Embodiment 3 and A406 in Embodiment 4, the encoding a prediction mode may specifically be:

(1): If the new prediction mode is multiplexed with the prediction mode 6, an encoder encodes a prediction mode obtained after the multiplexing (that is, the prediction mode obtained after the multiplexing is used as the prediction mode 6 at this time).

At this time, when an upper reference block and a left reference block of a prediction block can both be obtained, the prediction mode 6 represents the new prediction mode, and when at least one of: the upper reference block and the left reference block of the prediction block cannot be obtained, the prediction mode 6 represents the original prediction mode 6. (2): If the new prediction mode is multiplexed with the prediction mode 9, the encoder encodes a prediction mode obtained after the multiplexing (that is, the prediction mode obtained after the multiplexing is used as the prediction mode 9 at this time).

At this time, when an upper reference block and a left reference block of a prediction block can both be obtained, the prediction mode 9 represents the new prediction mode, and when at least one of: the upper reference block and the left reference block of the prediction block cannot be obtained, the prediction mode 9 represents the original prediction mode 9.

It should be noted that another encoding step is the same as that in Embodiment 3 and that in Embodiment 4, which is not described herein again.

(2): Decoding process

The decoding process is the same as that in Embodiment 3 and that in Embodiment 4.

That the new prediction mode is multiplexed with the prediction mode 6 is taken as an example. Because the new prediction mode has been multiplied with the prediction mode 6, when the upper reference block and the left reference block of the current block can both be obtained, if a prediction mode obtained by a decoder is the prediction mode 6, it is indicated that the current block uses the new prediction mode. When at least one of: the upper reference block and the left reference block of the current block cannot be obtained, if the prediction mode obtained through decoding is the prediction mode 6, it is indicated that the current block uses a prediction manner of the original prediction mode 6. Likewise, if the new prediction mode is multiplexed with the prediction mode 9, it is similar to the foregoing.

It can be known from the foregoing that in this embodiment, in addition to beneficial effects of Embodiment 3 and Embodiment 4 that may be implemented, because a manner of multiplexing the new prediction mode with the original prediction mode 6 or prediction mode 9 is adopted, compared with a manner of directly adding the new prediction mode, an encoding bit overhead may not need to be additionally added. In addition, because the prediction mode 6 and the prediction mode 9 correspond to the same prediction texture direction, most functions of original prediction modes can be maintained even if one of the prediction mode 6 and the prediction mode 9 is multiplexed.

**Embodiment 8**

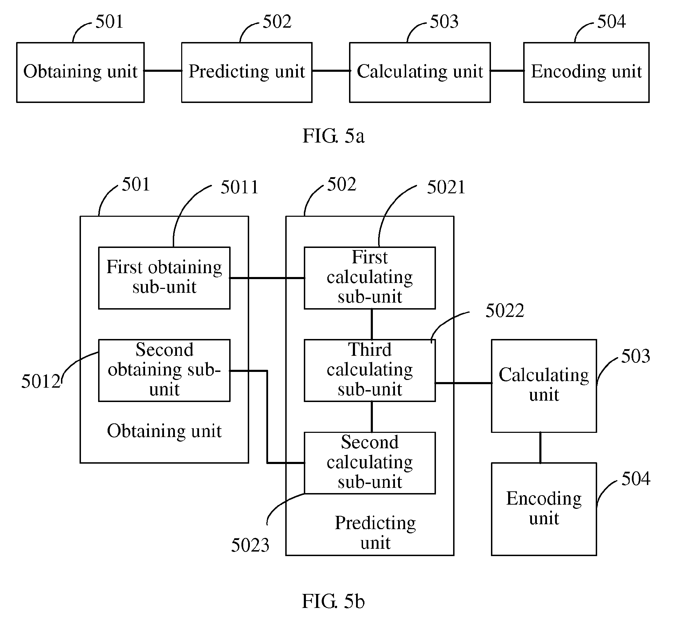

To better implement the foregoing method, an embodiment of the present invention correspondingly provides an encoder. Referring to FIG. 5a, the encoder includes an obtaining unit 501, a predicting unit 502, a calculating unit 503, and an encoding unit 504, where

the obtaining unit 501 is configured to obtain a first reference point and a second reference point that correspond to a prediction point from an upper reference edge and a left reference edge of a prediction block respectively according to a position of the prediction point in the prediction block and a prediction texture direction that corresponds to a prediction mode;
the predicting unit 502 is configured to perform, according to the position of the prediction point, linear interpolation on the first reference point and the second reference point that are obtained by the obtaining unit 501 to obtain a predicted value of the prediction point;
the calculating unit 503 is configured to calculate a prediction residual of the prediction block by using the predicted value that is obtained by the predicting unit 502; and
the encoding unit 504 is configured to encode the prediction mode and the prediction residual of the prediction block, where the prediction residual of the prediction block is obtained by the calculating unit 503.

For prediction modes of different angle degrees, manners for obtaining a first reference point and a second reference point are different. For example, for a prediction mode 6 and a prediction mode 9 (that is, 45-degree angle prediction modes), because a first reference point and a second reference point that are obtained from reference edges in the prediction mode 6 and the prediction mode 9 are both located at integer pixel positions, interpolation may not be considered at this time. That is, as shown in FIG. 5b, at this time, the obtaining unit 501 of the encoder may include a first obtaining sub-unit 5011 and a second obtaining sub-unit 5012, where

the first obtaining sub-unit 5011 is configured to obtain the first reference point that corresponds to the prediction point from the upper reference edge of the prediction block according to the position of the prediction point in the prediction block and a prediction texture direction that corresponds to a 45-degree angle prediction mode; and
the second obtaining sub-unit 5012 is configured to obtain the second reference point that corresponds to the prediction point from the left reference edge of the prediction block according to the position of the prediction point in the prediction block and the prediction texture direction that corresponds to the 45-degree angle prediction mode.

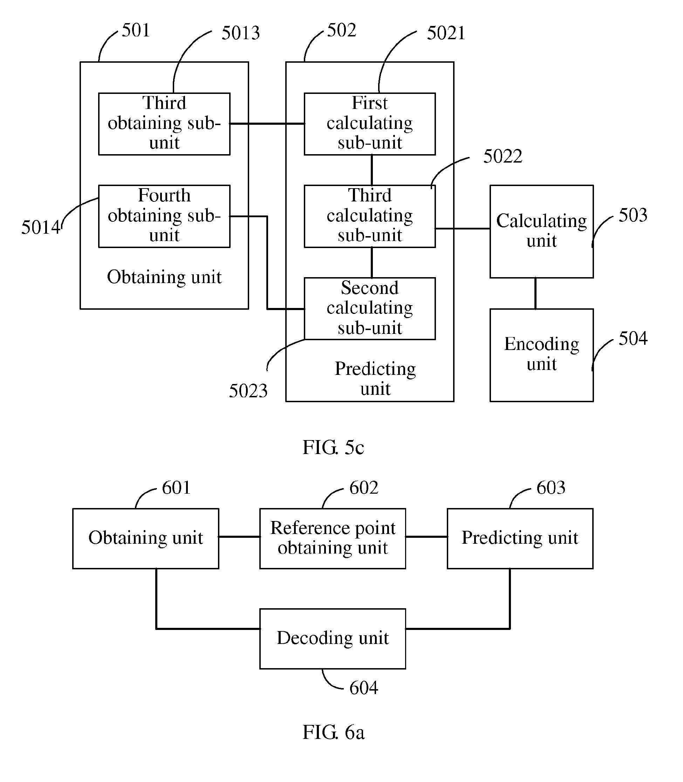

For another example, for prediction modes other than the prediction mode 6 and the prediction mode 9 (that is, non-45-degree angle prediction modes), because at least one of: a first reference point and a second reference point that are obtained from reference edges in the non-45-degree angle prediction modes is a sub-pixel position, at this time, interpolation needs to be considered when a reference point located at a sub-pixel position is obtained (interpolation does not need to be considered when a reference point located at an integer pixel position is obtained). That is, as shown in FIG. 5c, at this time, the obtaining unit 501 of the encoder may include a third obtaining sub-unit 5013 and a fourth obtaining sub-unit 5014, where

the third obtaining sub-unit 5013 is configured to obtain the first reference point that corresponds to the prediction point from the upper reference edge of the prediction block according to the position of the prediction point in the prediction block and a prediction texture direction that corresponds to a non-45-degree angle prediction mode; or is configured to perform interpolation on an integer pixel on the upper reference edge of the prediction block, and obtain, according to the position of the prediction point in the prediction block and a prediction texture direction that corresponds to a non-45-degree angle prediction mode, the first reference point that corresponds to the prediction point from the upper reference edge that is obtained after the interpolation; and
the fourth obtaining sub-unit 5014 is configured to obtain the second reference point that corresponds to the prediction point from the left reference edge of the prediction block according to the position of the prediction point in the prediction block and the prediction texture direction that corresponds to the non-45-degree angle prediction mode; or is configured to perform interpolation on an integer pixel on the left reference edge of the prediction block, and obtain, according to the position of the prediction point in the prediction block and the prediction texture direction that corresponds to the non-45-degree angle prediction mode, the second reference point that corresponds to the prediction point from the left reference edge that is obtained after the interpolation, where

the non-45-degree angle prediction mode refers to another prediction mode other than a 45-degree prediction mode.

As shown in FIG. 5b and FIG. 5c, the predicting unit 502 of the encoder may include a first calculating sub-unit 5021, a second calculating sub-unit 5022, and a third calculating sub-unit 5023, where

the first calculating sub-unit 5021 is configured to calculate a product of a value of the first reference point and a second distance to obtain a first product, where the second distance is a distance from the prediction point to the second reference point;

the second calculating sub-unit 5022 is configured to calculate a product of a value of the second reference point and a first distance to obtain a second product, where the first distance is a distance from the prediction point to the first reference point; and

the third calculating sub-unit 5023 is configured to divide a sum of the first product and the second product by a sum of the first distance and the second distance to obtain the predicted value of the prediction point.

If Ref1 is used to represent the first reference point, Ref2 is used to represent the second reference point, d1 is used to represent the first distance, and d2 is used to represent the second distance, a formula is:

$$P'(x, y) = (Ref1 * d2 + Ref2 * d1)/(d1 + d2).$$

Alternatively, the formula may also be transformed to:

$$P'(x, y) = Ref1 * weight + Ref2 * (1 - weight).$$

In the formula, weight represents an interpolation coefficient, and weight = d2/(d1 + d2). That is, the interpolation coefficient weight depends on the distance from the prediction point P(x, y) to the first reference point ref1 and the distance from the prediction point P(x, y) to the second reference point ref2. That is to say, the calculating the predicted value P'(x, y) of the prediction point P(x, y) may also specifically be: calculating an interpolation coefficient, and calculating the predicted value P'(x, y) of the prediction point P(x, y) according to the interpolation coefficient. That is:

the predicting unit 502 is specifically configured to calculate an interpolation coefficient according to the distance from the prediction point to the first reference point and the distance from the prediction point to the second reference point, and calculate the predicted value of the prediction point according to the interpolation coefficient.

Optionally, a prediction mode corresponding to a prediction manner in this spatial domain prediction encoding method may be set in an encoder as a new prediction mode. The new prediction mode may coexist with original prediction modes as an additional prediction mode, and one of the original prediction modes may be replaced with the new prediction mode, or the new prediction mode may be multiplexed with at least one of the original prediction modes, and for details, reference may be made to the foregoing embodiment and, which are not described herein again. The encoding unit 504 is specifically configured to encode the new prediction mode; or is configured to multiplex the new prediction mode with at least one of the original prediction modes and encode a prediction mode obtained after the multiplexing.

For specific implementation of the foregoing units, reference may be made to the foregoing embodiment, which is not described herein again.

It can be known from the foregoing that in the encoder in this embodiment, the obtaining unit 501 obtains a first reference point and a second reference point that correspond to a prediction point from an upper reference edge and a left reference edge of a prediction block respectively according to a position of the prediction point in the prediction block and a prediction texture direction that corresponds to the prediction mode, and then the predicting unit 502 performs, according to the position of the prediction point, linear interpolation on the first reference point and the second reference point to obtain a predicted value of the prediction point. Because two reference points are used for prediction in this solution, compared with the prior art in which only one reference point is used for prediction, prediction precision is improved, and furthermore, this solution is easy to implement and is applicable to both a luminance component and a chrominance component.

**Embodiment 9**

Correspondingly, an embodiment of the present invention further provides a decoder. As shown in FIG. 6a, the decoder includes an obtaining unit 601, a reference point obtaining unit 602, a predicting unit 603, and a decoding unit 604, where

the obtaining unit 601 is configured to obtain a prediction mode and a prediction residual of a prediction block; the reference point obtaining unit 602 is configured to obtain a first reference point and a second reference point that correspond to a prediction point from an upper reference edge and a left reference edge of the prediction block respectively according to a position of the prediction point in the prediction block and a prediction texture direction that corresponds to the prediction mode obtained by the obtaining unit 601; the predicting unit 603 is configured to perform, according to the position of the prediction point, linear interpolation on the first reference point and the second reference point that are obtained by the reference point obtaining unit 602 to obtain a predicted value of the prediction point; and the decoding unit 604 is configured to calculate a decoded value of the prediction block according to the prediction residual and the predicted value that is obtained by the predicting unit 603.

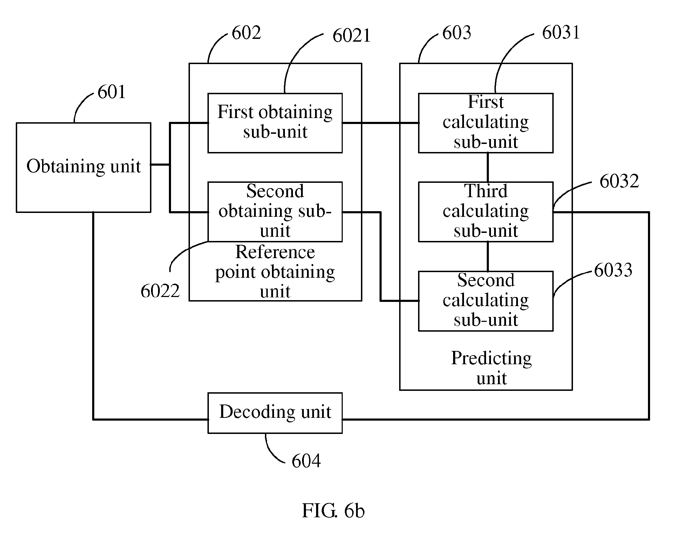

For prediction modes of different angle degrees, manners for obtaining a first reference point and a second reference point are different. For example, for a prediction mode 6 and a prediction mode 9 (that is, 45-degree angle prediction modes), because a first reference point and a second reference point that are obtained from reference edges in the prediction mode 6 and the prediction mode 9 are both located at integer pixel positions, interpolation may not be considered at this time. That is, as shown in FIG. 6b, at this time, the reference point obtaining unit may include a first obtaining sub-unit 6021 and a second obtaining sub-unit 6022, where

the first obtaining sub-unit 6021 is configured to obtain the first reference point that corresponds to the prediction point from the upper reference edge of the prediction block according to the position of the prediction point in the prediction block and a prediction texture direction that corresponds to a 45-degree angle prediction mode; and the second obtaining sub-unit 6022 is configured to obtain the second reference point that corresponds to the prediction point from the left reference edge of the prediction block according to the position of the prediction point in the prediction block and the prediction texture direction that corresponds to the 45-degree angle prediction mode.

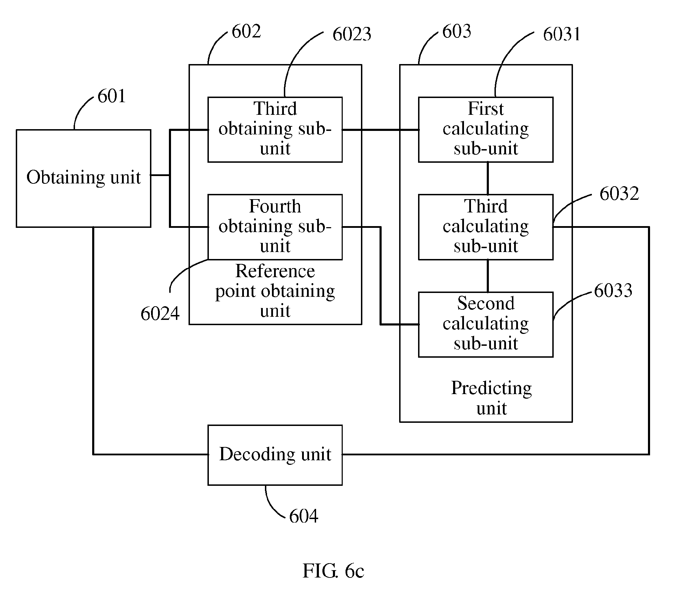

For another example, for prediction modes other than the prediction mode 6 and the prediction mode 9 (that is, non-45-degree angle prediction modes), because at least one of: a first reference point and a second reference point that are obtained from reference edges in the non-45-degree angle prediction modes is a sub-pixel position, at this time, interpolation needs to be considered when a reference point located at a sub-pixel position is obtained (interpolation does not need to be considered when a reference point located at an integer pixel position is obtained). That is, as shown in FIG. 6c, at this time, the reference point obtaining unit 602 includes a third obtaining sub-unit 6021 and a fourth obtaining sub-unit 6022, where

the third obtaining sub-unit 6021 is configured to obtain the first reference point that corresponds to the prediction point from the upper reference edge of the prediction block according to the position of the prediction point in the prediction block and a prediction texture direction that corresponds to a non-45-degree angle prediction mode; or is configured to perform interpolation on an integer pixel on the upper reference edge of the prediction block, and obtain, according to the position of the prediction point in the prediction block and a prediction texture direction that corresponds to a non-45-degree angle prediction mode, the first reference point that corresponds to the prediction point from the upper reference edge that is obtained after the interpolation; and the fourth obtaining sub-unit 6022 is configured to obtain the second reference point that corresponds to the prediction point from the left reference edge of the prediction block according to the position of the prediction point in the prediction block and the prediction texture direction that corresponds to the non-45-degree angle prediction mode; or is configured to perform interpolation on an integer pixel on the left reference edge of the prediction block, and obtain, according to the position of the prediction point in the prediction block and the prediction texture direction that corresponds to the non-45-degree angle prediction mode, the second reference point that corresponds to the prediction point from the left reference edge that is obtained after the interpolation, where the non-45-degree angle prediction mode refers to another prediction mode other than a 45-degree prediction mode.

The predicting unit 603 of the decoder may include a first calculating sub-unit 6031, a second calculating sub-unit 6032, and a third calculating sub-unit 6033, where

the first calculating sub-unit 6031 is configured to calculate a product of a value of the first reference point and a second distance to obtain a first product, where the second distance is a distance from the prediction point to the second reference point;

the second calculating sub-unit 6032 is configured to calculate a product of a value of the second reference point and a first distance to obtain a second product, where the first distance is a distance from the prediction point to the first reference point; and

the third calculating sub-unit 6033 is configured to divide a sum of the first product and the second product by a sum of the first distance and the second distance to obtain the predicted value of the prediction point.

If Ref1 is used to represent the first reference point, Ref2 is used to represent the second reference point, d1 is used to represent the first distance, and d2 is used to represent the second distance, a formula is:

$$P'(x, y) = (Ref1 * d2 + Ref2 * d1)/(d1 + d2).$$

Alternatively, the formula may also be transformed to:

$$P'(x, y) = Ref1 * weight + Ref2 * (1 - weight).$$

In the formula, weight represents an interpolation coefficient, and weight = d2/(d1 + d2). That is, the interpolation coefficient weight depends on the distance from the prediction point $P(x, y)$ to the first reference point ref1 and the distance from the prediction point $P(x, y)$ to the second reference point ref2. That is to say, the calculating the predicted value $P'(x, y)$ of the prediction point $P(x, y)$ may also specifically be: calculating an interpolation coefficient, and calculating the predicted value $P'(x, y)$ of the prediction point $P(x, y)$ according to the interpolation coefficient. That is:

the predicting unit 603 is specifically configured to calculate an interpolation coefficient according to the distance from the prediction point to the first reference point and the distance from the prediction point to the second reference point, and calculate the predicted value of the prediction point according to the interpolation coefficient.

For specific implementation of the foregoing units, reference may be made to the foregoing embodiment, which is not described herein again.

It can be known from the foregoing that in the decoder in this embodiment, the reference point obtaining unit 602 may obtain a first reference point and a second reference point that correspond to a prediction point from an upper reference edge and a left reference edge of a prediction block respectively according to a position of the prediction point in the prediction block and a prediction texture direction that corresponds to the prediction mode, and then the predicting unit 603 performs, according to the position of the prediction point, linear interpolation on the first reference point and the second reference point to obtain a predicted value of the prediction point. Because two reference points are used for prediction in this solution, compared with the prior art in which only one reference point is used for prediction, prediction precision is improved, and furthermore, this solution is easy to implement and is applicable to both a luminance component and a chrominance component.

**Embodiment 10**

Correspondingly, an embodiment of the present invention further provides a communication system, which includes any one encoder and decoder provided in the embodiments of the present invention, where

an encoder 701 is configured to obtain a first reference point and a second reference point that correspond to a prediction point from an upper reference edge and a left reference edge of a prediction block respectively according to a position of the prediction point in the prediction block and a prediction texture direction that corresponds to a prediction mode; perform, according to the position of the prediction point, linear interpolation on the first reference point and the second reference point to obtain a predicted value of the prediction point; calculate a prediction residual of the prediction block by using the predicted value; and encode the prediction residual and the prediction mode of the prediction block, and send the encoded prediction residual and prediction mode to a decoder; and

a decoder 702 is configured to obtain a prediction mode and a prediction residual of a prediction block; obtain a first reference point and a second reference point that correspond to a prediction point from an upper reference edge and a left reference edge of the prediction block respectively according to a position of the prediction point in the prediction block and a prediction texture direction that corresponds to the prediction mode; perform, according to the position of the prediction point, linear interpolation on the first reference point and the second reference point to obtain a predicted value of the prediction point; and calculate a decoded value of the prediction block according to the prediction residual and the predicted value.

For the foregoing devices, reference may be made to the foregoing embodiments, which are not described herein again.

It can be known from the foregoing that in the communication system in this embodiment, an encoder and a decoder obtain a first reference point and a second reference point that correspond to a prediction point from an upper reference edge and a left reference edge of a prediction block respectively according to a position of the prediction point in the prediction block and a prediction texture direction that corresponds to a prediction mode, and perform, according to the position of the prediction point, linear interpolation on the first reference point and the second reference point to obtain a predicted value of the prediction point. Because two reference points are used for prediction in this communication system, compared with the prior art in which only one reference point is used for prediction, prediction precision is improved, and furthermore, this solution is easy to implement and is applicable to both a luminance component and a chrominance component. Persons of ordinary skill in the art may understand that all or part of the steps of the methods in the foregoing embodiments may be implemented by a program instructing relevant hardware. The program may be stored in a computer readable storage medium. The storage medium may include: a read only memory (ROM, Read Only Memory), a random access memory (RAM, Random Access Memory), a magnetic disk, or an optical disk.

The spatial domain prediction encoding method, decoding method, apparatus, and system provided in the embodiments of the present invention are introduced in detail in the foregoing. A principle and an implementation manner of the present invention are described in this specification through specific examples. The description about the foregoing embodiments is merely provided for helping understand the method and core ideas of the present invention. Persons of ordinary skill in the art may make variations to the present invention in terms of the specific implementation and application scope according to the ideas of the present invention. Therefore, the content of the specification shall not be constructed as a limitation to the present invention.

**Claims**

1. A spatial domain prediction encoding method, comprising:

   obtaining a first reference point and a second reference point that correspond to a prediction point from an upper reference edge and a left reference edge of a prediction block respectively according to a position of the prediction point in the prediction block and a prediction texture direction that corresponds to a prediction mode;
   performing, according to the position of the prediction point, linear interpolation on the first reference point and the second reference point to obtain a predicted value of the prediction point;
   calculating a prediction residual of the prediction block by using the predicted value; and
   encoding the prediction residual and the prediction mode of the prediction block.

2. The method according to claim 1, wherein the obtaining a first reference point and a second reference point that correspond to a prediction point from an upper reference edge and a left reference edge of a prediction block respectively according to a position of the prediction point in the prediction block and a prediction texture direction that corresponds to a prediction mode comprises:

   obtaining the first reference point that corresponds to the prediction point from the upper reference edge of the prediction block according to the position of the prediction point in the prediction block and a prediction texture direction that corresponds to a 45-degree angle prediction mode; and
   obtaining the second reference point that corresponds to the prediction point from the left reference edge of the prediction block according to the position of the prediction point in the prediction block and the prediction texture direction that corresponds to the 45-degree angle prediction mode.

3. The method according to claim 1, wherein the obtaining a first reference point and a second reference point that correspond to a prediction point from an upper reference edge and a left reference edge of a prediction block respectively according to a position of the prediction point in the prediction block and a prediction texture direction that corresponds to a prediction mode comprises:

performing interpolation on an integer pixel on the upper reference edge of the prediction block, and obtaining, according to the position of the prediction point in the prediction block and a prediction texture direction that corresponds to a non-45-degree angle prediction mode, the first reference point that corresponds to the prediction point from the upper reference edge that is obtained after the interpolation; and obtaining, according to the position of the prediction point in the prediction block and the prediction texture direction that corresponds to the non-45-degree angle prediction mode, the second reference point that corresponds to the prediction point from the left reference edge of the prediction block; or

obtaining, according to the position of the prediction point in the prediction block and a prediction texture direction that corresponds to a non-45-degree angle prediction mode, the first reference point that corresponds to the prediction point from the upper reference edge of the prediction block; and performing interpolation on an integer pixel on the left reference edge of the prediction block, and obtaining, according to the position of the prediction point in the prediction block and the prediction texture direction that corresponds to the non-45-degree angle prediction mode, the second reference point that corresponds to the prediction point from the left reference edge that is obtained after the interpolation; or

performing interpolation on an integer pixel on the upper reference edge of the prediction block, and obtaining, according to the position of the prediction point in the prediction block and a prediction texture direction that corresponds to a non-45-degree angle prediction mode, the first reference point that corresponds to the prediction point from the upper reference edge that is obtained after the interpolation; and performing interpolation on an integer pixel on the left reference edge of the prediction block, and obtaining, according to the position of the prediction point in the prediction block and the prediction texture direction that corresponds to the non-45-degree angle prediction mode, the second reference point that corresponds to the prediction point from the left reference edge that is obtained after the interpolation, wherein

the non-45-degree angle prediction mode refers to another prediction mode other than a 45-degree prediction mode.

4. The method according to any one of claims 1 to 3, wherein the performing, according to the position of the prediction point, linear interpolation on the first reference point and the second reference point to obtain a predicted value of the prediction point comprises that:

the predicted value of the prediction point depends on a distance from the prediction point to the first reference point and a distance from the prediction point to the second reference point.

5. The method according to any one of claims 1 to 3, wherein
the prediction mode is a prediction mode that is set according to a prediction manner in the spatial domain prediction encoding method.

6. A spatial domain prediction decoding method, comprising:

obtaining a prediction mode and a prediction residual of a prediction block;
obtaining a first reference point and a second reference point that correspond to a prediction point from an upper reference edge and a left reference edge of the prediction block respectively according to a position of the prediction point in the prediction block and a prediction texture direction that corresponds to the prediction mode;
performing, according to the position of the prediction point, linear interpolation on the first reference point and the second reference point to obtain a predicted value of the prediction point; and
calculating a decoded value of the prediction block according to the prediction residual and the predicted value.

7. The method according to claim 6, wherein the obtaining a first reference point and a second reference point that correspond to a prediction point from an upper reference edge and a left reference edge of the prediction block respectively according to a position of the prediction point in the prediction block and a prediction texture direction that corresponds to the prediction mode comprises:

obtaining the first reference point that corresponds to the prediction point from the upper reference edge of the prediction block according to the position of the prediction point in the prediction block and a prediction texture direction that corresponds to a 45-degree angle prediction mode; and
obtaining the second reference point that corresponds to the prediction point from the left reference edge of the prediction block according to the position of the prediction point in the prediction block and the prediction texture direction that corresponds to the 45-degree angle prediction mode.

8. The method according to claim 6, wherein the obtaining a first reference point and a second reference point that correspond to a prediction point from an upper reference edge and a left reference edge of the prediction block respectively according to a position of the prediction point in the prediction block and a prediction texture direction that corresponds to the prediction mode comprises:

performing interpolation on an integer pixel on the upper reference edge of the prediction block, and obtaining, according to the position of the prediction point in the prediction block and a prediction texture direction that corresponds to a non-45-degree angle prediction mode, the first reference point that corresponds to the prediction point from the upper reference edge that is obtained after the interpolation; and obtaining, according to the position of the prediction point in the prediction block and the prediction texture direction that corresponds to the non-45-degree angle prediction mode, the second reference point that corresponds to the prediction point from the left reference edge of the prediction block; or

obtaining, according to the position of the prediction point in the prediction block and a prediction texture direction that corresponds to a non-45-degree angle prediction mode, the first reference point that corresponds to the prediction point from the upper reference edge of the prediction block; and performing interpolation on an integer pixel on the left reference edge of the prediction block, and obtaining, according to the position of the prediction point in the prediction block and the prediction texture direction that corresponds to the non-45-degree angle prediction mode, the second reference point that corresponds to the prediction point from the left reference edge that is obtained after the interpolation; or

performing interpolation on an integer pixel on the upper reference edge of the prediction block, and obtaining, according to the position of the prediction point in the prediction block and a prediction texture direction that corresponds to a non-45-degree angle prediction mode, the first reference point that corresponds to the prediction point from the upper reference edge that is obtained after the interpolation; and performing interpolation on an integer pixel on the left reference edge of the prediction block, and obtaining, according to the position of the prediction point in the prediction block and the prediction texture direction that corresponds to the non-45-degree angle prediction mode, the second reference point that corresponds to the prediction point from the left reference edge that is obtained after the interpolation, wherein

the non-45-degree angle prediction mode refers to another prediction mode other than a 45-degree prediction mode.

9. The method according to any one of claims 6 to 8, wherein the performing, according to the position of the prediction point, linear interpolation on the first reference point and the second reference point to obtain a predicted value of the prediction point comprises that:

the predicted value of the prediction point depends on a distance from the prediction point to the first reference point and a distance from the prediction point to the second reference point.

10. The method according to any one of claims 6 to 8, wherein
the prediction mode is a new prediction mode that is set according to a prediction manner in the spatial domain prediction encoding method.

11. The method according to claim 10, wherein the new prediction mode is multiplexed with at least one of other prediction modes, and before the obtaining the prediction mode of the prediction block, the method further comprises:

determining that an upper reference block and a left reference block of the prediction block can both be obtained.

12. An encoder, comprising:

an obtaining unit, configured to obtain a first reference point and a second reference point that correspond to a prediction point from an upper reference edge and a left reference edge of a prediction block respectively according to a position of the prediction point in the prediction block and a prediction texture direction that corresponds to a prediction mode;
a predicting unit, configured to perform, according to the position of the prediction point, linear interpolation on the first reference point and the second reference point that are obtained by the obtaining unit to obtain a predicted value of the prediction point;
a calculating unit, configured to calculate a prediction residual of the prediction block by using the predicted value that is obtained by the predicting unit; and
an encoding unit, configured to encode the prediction mode and the prediction residual of the prediction block, wherein the prediction residual of the prediction block is obtained by the calculating unit.

13. The encoder according to claim 12, wherein the obtaining unit comprises:

a first obtaining sub-unit, configured to obtain the first reference point that corresponds to the prediction point from the upper reference edge of the prediction block according to the position of the prediction point in the prediction block and a prediction texture direction that corresponds to a 45-degree angle prediction mode; and a second obtaining sub-unit, configured to obtain the second reference point that corresponds to the prediction point from the left reference edge of the prediction block according to the position of the prediction point in the prediction block and the prediction texture direction that corresponds to the 45-degree angle prediction mode.

14. The encoder according to claim 12, wherein the obtaining unit comprises:

a third obtaining sub-unit, configured to obtain the first reference point that corresponds to the prediction point from the upper reference edge of the prediction block according to the position of the prediction point in the prediction block and a prediction texture direction that corresponds to a non-45-degree angle prediction mode; or configured to perform interpolation on an integer pixel on the upper reference edge of the prediction block, and obtain, according to the position of the prediction point in the prediction block and a prediction texture direction that corresponds to a non-45-degree angle prediction mode, the first reference point that corresponds to the prediction point from the upper reference edge that is obtained after the interpolation; and a fourth obtaining sub-unit, configured to obtain the second reference point that corresponds to the prediction point from the left reference edge of the prediction block according to the position of the prediction point in the prediction block and the prediction texture direction that corresponds to the non-45-degree angle prediction mode; or configured to perform interpolation on an integer pixel on the left reference edge of the prediction block, and obtain, according to the position of the prediction point in the prediction block and the prediction texture direction that corresponds to the non-45-degree angle prediction mode, the second reference point that corresponds to the prediction point from the left reference edge that is obtained after the interpolation, wherein the non-45-degree angle prediction mode refers to another prediction mode other than a 45-degree prediction mode.

15. A decoder, comprising:

an obtaining unit, configured to obtain a prediction mode and a prediction residual of a prediction block; a reference point obtaining unit, configured to obtain a first reference point and a second reference point that correspond to a prediction point from an upper reference edge and a left reference edge of the prediction block respectively according to a position of the prediction point in the prediction block and a prediction texture direction that corresponds to the prediction mode; a predicting unit, configured to perform, according to the position of the prediction point, linear interpolation on the first reference point and the second reference point to obtain a predicted value of the prediction point; and a decoding unit, configured to calculate a decoded value of the prediction block according to the prediction residual and the predicted value.

16. The decoder according to claim 15, wherein the reference point obtaining unit comprises:

a first obtaining sub-unit, configured to obtain the first reference point that corresponds to the prediction point from the upper reference edge of the prediction block according to the position of the prediction point in the prediction block and a prediction texture direction that corresponds to a 45-degree angle prediction mode; and a second obtaining sub-unit, configured to obtain the second reference point that corresponds to the prediction point from the left reference edge of the prediction block according to the position of the prediction point in the prediction block and the prediction texture direction that corresponds to the 45-degree angle prediction mode.

17. The decoder according to claim 15, wherein the reference point obtaining unit comprises:

a third obtaining sub-unit, configured to obtain the first reference point that corresponds to the prediction point from the upper reference edge of the prediction block according to the position of the prediction point in the prediction block and a prediction texture direction that corresponds to a non-45-degree angle prediction mode; or configured to perform interpolation on an integer pixel on the upper reference edge of the prediction block, and obtain, according to the position of the prediction point in the prediction block and a prediction texture direction that corresponds to a non-45-degree angle prediction mode, the first reference point that corresponds to the prediction point from the upper reference edge that is obtained after the interpolation; and

a fourth obtaining sub-unit, configured to obtain the second reference point that corresponds to the prediction point from the left reference edge of the prediction block according to the position of the prediction point in the prediction block and the prediction texture direction that corresponds to the non-45-degree angle prediction mode; or configured to perform interpolation on an integer pixel on the left reference edge of the prediction block, and obtain, according to the position of the prediction point in the prediction block and the prediction texture direction that corresponds to the non-45-degree angle prediction mode, the second reference point that corresponds to the prediction point from the left reference edge that is obtained after the interpolation, wherein the non-45-degree angle prediction mode refers to another prediction mode other than a 45-degree prediction mode.

18. A communication system, comprising an encoder according to any one of claims 12 to 14 and a decoder according to any one of claims 15 to 17.

FIG. 1a

FIG. 1b

Obtain a first reference point and a second reference point that correspond to a prediction point from an upper reference edge and a left reference edge of a prediction block respectively according to a position of the prediction point in the prediction block and a prediction texture direction that corresponds to a prediction mode ⟋ 101

Perform, according to the position of the prediction point, linear interpolation on the first reference point and the second reference point to obtain a predicted value of the prediction point ⟋ 102

Calculate a prediction residual of the prediction block by using predicted values of prediction points in the prediction block ⟋ 103

Encode the prediction residual and the prediction mode of the prediction block ⟋ 104

FIG. 1c

FIG. 1d

FIG. 1e

Obtain a prediction mode and a prediction residual of a prediction block — 201

Obtain a first reference point and a second reference point that correspond to a prediction point from an upper reference edge and a left reference edge of the prediction block respectively according to a position of the prediction point in the prediction block and a prediction texture direction that corresponds to the prediction mode — 202

Perform, according to the position of the prediction point, linear interpolation on the first reference point and the second reference point to obtain a predicted value of the prediction point — 203

Calculate a decoded value of the prediction block according to the prediction residual and the predicted value — 204

FIG. 2

An encoder obtains a first reference point ref1 that corresponds to a current point P(x, y) from an upper reference edge of a current block according to a prediction texture direction that corresponds to a prediction mode 6 or a prediction mode 9 — A301

The encoder obtains a second reference point ref2 that corresponds to the current point P(x, y) from a left reference edge of the current block according to the prediction texture direction that corresponds to the prediction mode 6 or the prediction mode 9 — A302

The encoder performs, according to a position of the current point P(x, y), linear interpolation on the first reference point ref1 and the second reference point ref2 to obtain a predicted value P'(x, y) of the current point P(x, y) — A303

The encoder performs prediction on another prediction point in the current block by using a method of steps A301 to A303, and obtains predicted values that correspond to all prediction points in the current block — A304

The encoder calculates a prediction residual of the current block by using the predicted values that correspond to all the prediction points in the current block — A305

The encoder encodes the prediction residual of the current block and a corresponding prediction mode — A306

FIG. 3a

A decoder obtains a prediction mode and a prediction residual of a current block — B301

The decoder obtains a first reference point ref1 that corresponds to a current point P(x, y) from an upper reference edge of the current block according to a prediction texture direction that corresponds to a prediction mode 6 or a prediction mode 9 — B302

The decoder obtains a second reference point ref2 that corresponds to the current point P(x, y) from a left reference edge of the current block according to the prediction texture direction that corresponds to the prediction mode 6 or the prediction mode 9 — B303

The decoder performs, according to a position of the current point P(x, y), linear interpolation on the first reference point ref1 and the second reference point ref2 to obtain a predicted value P'(x, y) of the current point P(x, y) — B304

The decoder performs prediction on another prediction point in the current block by using a method of steps B301 to B304, and obtains predicted values that correspond to all prediction points in the current block — B305

The decoder obtains a decoded value of the current block by adding the prediction residual to the predicted value — B306

FIG. 3b

An encoder performs interpolation on an integer pixel on an upper reference edge of a current block, and obtains, according to a prediction texture direction that corresponds to a non-45-degree angle prediction mode, a first reference point that corresponds to a current point from the upper reference edge that is obtained after the interpolation — A401

The encoder performs interpolation on an integer pixel on a left reference edge of the current block, and obtains, according to the prediction texture direction that corresponds to the non-45-degree angle prediction mode, a second reference point that corresponds to the current point from the left reference edge that is obtained after the interpolation — A402

The encoder performs, according to a position of the current point, linear interpolation on the first reference point and the second reference point to obtain a predicted value of the current point — A403

The encoder performs prediction on another prediction point in the current block by using a method of steps A401 to A403, and obtains predicted values that correspond to all prediction points in the current block — A404

The encoder calculates a prediction residual of the current block by using the predicted values that correspond to all the prediction points in the current block — A405

The encoder encodes the prediction residual of the current block and a corresponding prediction mode — A406

FIG. 4a

| | |
|---|---|
| A decoder obtains a prediction mode and a prediction residual of a current block | B401 |

| | |
|---|---|
| The decoder performs interpolation on an integer pixel on an upper reference edge of the current block, and obtains, according to a prediction texture direction that corresponds to a non-45-degree angle prediction mode, a first reference point that corresponds to a current point from the upper reference edge that is obtained after the interpolation | B402 |

| | |
|---|---|
| The decoder performs interpolation on an integer pixel on a left reference edge of the current block, and obtains, according to the prediction texture direction that corresponds to the non-45-degree angle prediction mode, a second reference point that corresponds to the current point from the left reference edge that is obtained after the interpolation | B403 |

| | |
|---|---|
| The decoder performs, according to a position of the current point, linear interpolation on the first reference point and the second reference point to obtain a predicted value of the current point | B404 |

| | |
|---|---|
| The decoder performs prediction on another prediction point in the current block by using a method of steps B401 to B404, and obtains predicted values that correspond to all prediction points in the current block | B405 |

| | |
|---|---|
| The decoder obtains a decoded value of the current block by adding the prediction residual to the predicted value | B406 |

FIG. 4b

501

Obtaining unit

502

Predicting unit

503

Calculating unit

504

Encoding unit

FIG. 5a

501  5011  502  5021

First obtaining sub-unit

First calculating sub-unit

5022

5012

Second obtaining sub-unit

Third calculating sub-unit

Calculating unit  503

Obtaining unit

Second calculating sub-unit

Encoding unit  504

5023

Predicting unit

FIG. 5b

FIG. 5c

FIG. 6a

FIG. 6b

FIG. 6c

# INTERNATIONAL SEARCH REPORT

International application No.

PCT/CN2012/070384

**A. CLASSIFICATION OF SUBJECT MATTER**

See Extra Sheet

According to International Patent Classification (IPC) or to both national classification and IPC

**B. FIELDS SEARCHED**

Minimum documentation searched (classification system followed by classification symbols)

IPC: H04N7/-, H03M7/-

Documentation searched other than minimum documentation to the extent that such documents are included in the fields searched

Electronic data base consulted during the international search (name of data base and, where practicable, search terms used)

CNKI,CNABS,CNTXT,VEN: prediction, code, encode, decode, interpolation, direction, mode, texture, neighbor, neighborhood, adjacent, up, left, first, second, pixel, position, accurate, accuracy

**C. DOCUMENTS CONSIDERED TO BE RELEVANT**

| Category* | Citation of document, with indication, where appropriate, of the relevant passages | Relevant to claim No. |
|---|---|---|
| Y | CN101895751A(UNIV PEKING) 24 Nov.2010(24.11.2010) description ,paragraphs [0018]-[0075], Fig.7 | 1-18 |
| Y | CN101827270A(HONG KONG APPLIED SCI&TECHNOLOGY RES) 08 Sep.2010(08.09.2010) description ,paragraphs [0037]-[0061], figures 6-7 | 1-18 |
| Y | CN101690235A(SHARP KK) 31 Mar.2010(31.03.2010) description, page 43 line 15 to page 45 line 26, figures 11-12 | 3-5,8-11,14,17-18 |
| A | CN101600116A(BEIJING VIMICRO CORP) 09 Dec.2009(09.12.2009) the whole document | 1-18 |

☐ Further documents are listed in the continuation of Box C.  ☒ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| 31 Mar.2012(31.03.2012) | 26 Apr.2012(26.04.2012) |

| Name and mailing address of the ISA <br> State Intellectual Property Office of the P. R. China <br> No. 6, Xitucheng Road, Jimenqiao <br> Haidian District, Beijing 100088, China <br> Facsimile No. (86-10) 62019451 | Authorized officer <br><br> QIN, Juxiu <br><br> Telephone No. (86-10) **62412043** |

Form PCT/ISA /210 (second sheet) (July 2009)

## INTERNATIONAL SEARCH REPORT
### Information on patent family members

| International application No. |
| --- |
| PCT/CN2012/070384 |

| Patent Documents referred in the Report | Publication Date | Patent Family | Publication Date |
| --- | --- | --- | --- |
| CN101895751A | 24.11.2010 | CN101895751B | 08.02.2012 |
| CN101827270A | 08.09.2010 | CN101827270B | 14.12.2011 |
| CN101690235A | 31.03.2010 | EP2166769A1 | 24.03.2010 |
| | | WO2009004985A1 | 08.01.2009 |
| | | IN201000057P4 | 04.06.2010 |
| | | US2010208802A1 | 19.08.2010 |
| | | JP2009521599X | 26.08.2010 |
| CN101600116A | 09.12.2009 | NONE | |

Form PCT/ISA /210 (patent family annex) (July 2009)

## INTERNATIONAL SEARCH REPORT

| International application No. |
| --- |
| PCT/CN2012/070384 |

CONTINUE OF CLASSIFICATION OF SUBJECT MATTER

H04N7/46(2006.01)i
H04N7/26(2006.01)i
H04N7/32(2006.01)i

Form PCT/ISA /210 (extra sheet) (July 2009)